(19) **Europäisches Patentamt**
**European Patent Office**
**Office européen des brevets**

(11) **EP 2 102 619 B1**

(12) **EUROPEAN PATENT SPECIFICATION**

(45) Date of publication and mention
of the grant of the patent:
**22.03.2017 Bulletin 2017/12**

(51) Int Cl.:
*G10L 19/08* (2013.01)     *G10L 19/12* (2013.01)

(21) Application number: **07816046.2**

(22) Date of filing: **24.10.2007**

(86) International application number:
**PCT/CA2007/001896**

(87) International publication number:
**WO 2008/049221 (02.05.2008 Gazette 2008/18)**

(54) **METHOD AND DEVICE FOR CODING TRANSITION FRAMES IN SPEECH SIGNALS**

VERFAHREN UND EINRICHTUNG ZUR CODIERUNG VON ÜBERGANGSRAHMEN IN SPRACHSIGNALEN

PROCÉDÉ ET DISPOSITIF POUR CODER LES TRAMES DE TRANSITION DANS DES SIGNAUX DE DISCOURS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.10.2006 US 853749 P**

(43) Date of publication of application:
**23.09.2009 Bulletin 2009/39**

(73) Proprietor: **VoiceAge Corporation**
**Quebec H3R 2H6 (CA)**

(72) Inventors:
• **EKSLER, Vaclav**
**Sherbrooke, Québec J1K 2C3 (CA)**
• **JELINEK, Milan**
**Sherbrooke, Québec J1L 2W8 (CA)**
• **SALAMI, Redwan**
**St-Laurent, Québec H4R 2Y3 (CA)**

(74) Representative: **Ipside**
**6, Impasse Michel Labrousse**
**31100 Toulouse (FR)**

(56) References cited:
**US-A- 5 119 424**       **US-A- 5 495 555**
**US-A1- 2001 053 972**   **US-A1- 2004 018 162**
**US-A1- 2004 148 162**   **US-B1- 6 233 550**

• **MCELROY D ET AL: "Wideband speech coding using multiple codebooks and glottal pulses", 1995 INTERNATIONAL CONFERENCE ON ACOUSTICS, SPEECH, AND SIGNAL PROCESSING - 9-12 MAY 1995 - DETROIT, MI, USA, IEEE - NEW YORK, NY, USA, vol. 1, 9 May 1995 (1995-05-09), pages 253-256, XP010625218, DOI: 10.1109/ICASSP.1995.479521 ISBN: 978-0-7803-2431-2**
• **ANDERSEN ET AL.: 'ILBC - A Linear Predictive Coder with Robustness to Packet Loss' SPEECH CODING, 2002, IEEE WORKSHOP PROCEEDINGS 06 October 2002 - 09 October 2002, page 2325, XP010647200**
• **CHIBANI ET AL.: 'Fast Recovery for a CELP-Like Speech Codec After a Frame Erasure' AUDIO, SPEECH AND LANGUAGE PROCESSING, IEEE TRANSACTIONS vol. 15, no. 8, November 2007, pages 2485 - 2495, XP011192967**
• **ANDERSON ET AL.: 'Pitch Resynchronization with Recovering from a Late Frame in a Predictive Speech Decoder' PROC. IEEE INT. CONF. ON ACOUSTICS, SPEECH AND SIGNAL PROCESSING, TOULOUSE, FRANCE May 2006, pages 245 - 248, XP003009933**

**Description**

**FIELD OF THE INVENTION**

The present invention relates to a technique for digitally encoding a sound signal, for example a speech or audio signal, in view of transmitting and synthesizing this sound signal.

More specifically, but not exclusively, the present invention relates a method and device for encoding transition frames and frames following the transition in a sound signal, for example a speech or audio signal, in order to reduce the error propagation at the decoder in case of frame erasure and/or to enhance coding efficiency mainly at the beginning of voiced segments (onset frames). In particular, the method and device replace the adaptive codebook typically used in predictive encoders by a codebook of glottal impulse shapes in transition frames and in frames following the transition. The glottal-shape codebook can be a fixed codebook independent of the past excitation whereby, once the frame erasure is over, the encoder and the decoder use the same excitation so that convergence to clean-channel synthesis is quite rapid. In onset frame coding in traditional CELP, the past excitation buffer is updated using the noise-like excitation of the previous unvoiced or inactive frame that is very different from the current excitation. On the other hand, the proposed technique can build the periodic part of the excitation very accurately.

**BACKGROUND**

A speech encoder converts a speech signal into a digital bit stream which is transmitted over a communication channel or stored in a storage medium. The speech signal is digitized, that is sampled and quantized with usually 16-bits per sample. The speech encoder has the role of representing these digital samples with a smaller number of bits while maintaining a good subjective speech quality. The speech decoder or synthesizer operates on the transmitted or stored bit stream and converts it back to a speech signal.

Code-Excited Linear Prediction *(CELP)* coding is one of the best prior art techniques for achieving a good compromise between subjective quality and bit rate. This coding technique forms the basis of several speech coding standards both in wireless and wireline applications. In *CELP* coding, the sampled speech signal is processed in successive blocks of $M$ samples usually called frames, where $M$ is a predetermined number corresponding typically to 10-30 ms. A linear prediction (*LP*) filter is computed and transmitted every frame. The computation of the *LP* filter typically needs a lookahead, a 5-15 ms speech segment from the subsequent frame. The $M$-sample frame is divided into smaller blocks called subframes. Usually the number of subframes is three or four resulting in 4-10 ms subframes. In each subframe, an excitation signal is usually obtained from two components, the past excitation and the innovative, fixed-codebook excitation. The component formed from the past excitation is often referred to as the adaptive codebook or pitch excitation. The parameters characterizing the excitation signal are coded and transmitted to the decoder, where the reconstructed excitation signal is used as the input of the *LP* filter.

*CELP*-type speech codecs rely heavily on prediction to achieve their high performance. The prediction used can be of different kinds but usually comprises the use of an adaptive codebook containing an excitation signal selected in past frames. A *CELP* encoder exploits the quasi periodicity of voiced speech signal by searching in the past excitation the segment most similar to the segment being currently encoded. The same past excitation signal is maintained also in the decoder. It is then sufficient for the encoder to send a delay parameter and a gain for the decoder to reconstruct the same excitation signal as is used in the encoder. The evolution (difference) between the previous speech segment and the currently encoded speech segment is further modeled using an innovation selected from a fixed codebook. The *CELP* technology will be described in more detail herein below.

A problem of strong prediction inherent in *CELP*-based speech coders appears in presence of transmission errors (erased frames or packets) when the state of the encoder and the decoder become desynchronized. Due to the prediction, the effect of an erased frame is thus not limited to the erased frame, but continues to propagate after the erasure, often during several following frames. Naturally, the perceptual impact can be very annoying.

Transitions from unvoiced speech segment to voiced speech segment (e.g. transition between a consonant or a period of inactive speech, and a vowel) or transitions between two different voiced segments (e.g. transitions between two vowels) are the most problematic cases for frame erasure concealment. When a transition from unvoiced speech segment to voiced speech segment (voiced onset) is lost, the frame right before the voiced onset frame is unvoiced or inactive and thus no meaningful periodic excitation is found in the buffer of the past excitation (adaptive codebook). At the encoder, the past periodic excitation builds up in the adaptive codebook during the onset frame, and the following voiced frame is encoded using this past periodic excitation. Most frame error concealment techniques use the information from the last correctly received frame to conceal the missing frame. When the onset frame is lost, the decoder past excitation buffer will be thus updated using the noise-like excitation of the previous frame (unvoiced or inactive frame). The periodic part of the excitation is thus completely missing in the adaptive codebook at the decoder after a lost voiced onset and it can take up to several frames for the decoder to recover from this loss.

A similar situation occurs in the case of lost voiced to voiced transition. In that case, the excitation stored in the adaptive codebook before the transition frame has typically very different characteristics from the excitation stored in the adaptive codebook after the transition. Again, as the decoder usually conceals the lost frame with the use of the past frame information, the state of the encoder and the decoder will be very different, and the synthesized signal can suffer from important distortion.

US 6,223,550 discloses a CELP codec where the adaptive codebook is replaced for transient frames by a codebook comprising multipulse excitation entries.

## OBJECTS OF THE INVENTION

An object of the present invention is therefore to provide a method and device for encoding transition frames in a predictive speech and/or audio encoder in order to improve the encoder robustness against lost frames and/or improve the coding efficiency.

Another object of the present invention is to eliminate error propagation and increase coding efficiency in *CELP*-based codecs by replacing the inter-frame dependent adaptive codebook search by a non-predictive, for example glottal-shape, codebook search. This technique requires no extra delay, negligible additional complexity, and no increase in bit rate compared to traditional *CELP* encoding.

These objects are achieved by the independent claim.

## SUMMARY OF THE INVENTION

More specifically, in accordance with one aspect of the present invention, there is provided a transition mode method for use in a predictive-type sound signal codec for producing a transition mode excitation replacing an adaptive codebook excitation in a transition frame and/or a frame following the transition in the sound signal, comprising: providing a transition mode codebook for generating a set of codevectors independent from past excitation; supplying a codebook index to the transition mode codebook; and generating, by means of the transition mode codebook and in response to the codebook index, one of the codevectors of the set corresponding to the transition mode excitation.

According to a second aspect of the present invention, there is provided a transition mode device for use in a predictive-type sound signal codec for producing a transition mode excitation replacing an adaptive codebook excitation in a transition frame and/or a frame following the transition in the sound signal, comprising an input for receiving a codebook index and a transition mode codebook for generating a set of codevectors independent from past excitation. The transition mode codebook is responsive to the index for generating, in the transition frame and/or frame following the transition, one of the codevectors of the set corresponding to said transition mode excitation.

According to a third aspect of the present invention, there is provided an encoding method for generating a transition mode excitation replacing an adaptive codebook excitation in a transition frame and/or a frame following the transition in a sound signal, comprising: generating a codebook search target signal; providing a transition mode codebook for generating a set of codevectors independent from past excitation, the codevectors of the set each corresponding to a respective transition mode excitation; searching the transition mode codebook for finding the codevector of the set corresponding to a transition mode excitation optimally corresponding to the codebook search target signal.

According to a fourth aspect of the present invention, there is provided an encoder device for generating a transition mode excitation replacing an adaptive codebook excitation in a transition frame and/or a frame following the transition in a sound signal, comprising: a generator of a codebook search target signal; a transition mode codebook for generating a set of codevectors independent from past excitation, the codevectors of the set each corresponding to a respective transition mode excitation; and a searcher of the transition mode codebook for finding the codevector of the set corresponding to a transition mode excitation optimally corresponding to the codebook search target signal.

According to a fifth aspect of the present invention, there is provided a decoding method for generating a transition mode excitation replacing an adaptive codebook excitation in a transition frame and/or a frame following the transition in a sound signal, comprising: receiving a codebook index; supplying the codebook index to a transition mode codebook for generating a set of codevectors independent from past excitation; and generating, by means of the transition mode codebook and in response to the codebook index, one of the codevectors of the set corresponding to the transition mode excitation.

According to a sixth aspect of the present invention, there is provided a decoder device for generating a transition mode excitation replacing an adaptive codebook excitation in a transition frame and/or a frame following the transition in a sound signal, comprising an input for receiving a codebook index and a transition mode codebook for generating a set of codevectors independent from past excitation. The transition mode codebook is responsive to the index for generating in the transition frame and/or frame following the transition one of the codevectors of the set corresponding to the transition mode excitation.

The foregoing and other objects, advantages and features of the present invention will become more apparent upon reading of the following non-restrictive description of an illustrative embodiment thereof, given by way of example only with reference to the accompanying drawings.

## BRIEF DESCRIPTION OF THE DRAWINGS

In the appended drawings:

Figure 1 a is a schematic block diagram of a *CELP*-based encoder;

Figure 1b is a schematic block diagram of a *CELP*-based decoder;

Figure 2 is a schematic block diagram of a frame classification state machine for erasure concealment;

Figure 3 is an example of segment of a speech signal with one voiced transition frame and one onset frame;

Figure 4 is a functional block diagram illustrating a classification rule to select *TM* (Transition Mode) frames in speech onsets, where N_TM_FRAMES stands for a number of consecutive frames to prevent using a *TM* coding technique, 'clas' stands for a frame class, and VOICED_TYPE means *ONSET*, *VOICED* and *VOICED TRANSITION* classes;

Figure 5a is a schematic illustration of an example of frame of a speech signal divided into four (4) subframes, showing the speech signal in the time domain;

Figure 5b is a schematic illustration of an example of frame of a speech signal divided into four (4) subframes, showing a *LP* residual signal;

Figure 5c is a schematic illustration of an example of frame of a speech signal divided into four (4) subframes, showing a first stage excitation signal constructed using the *TM* coding technique in the encoder;

Figure 6 show graphs illustrating eight glottal impulses with 17-sample length used for the glottal-shape codebook construction, wherein the x-axis denotes a discrete time index and the y-axis an amplitude of the impulse;

Figure 7 is a schematic block diagram of an example of *TM* portion of a *CELP* encoder, where *k'* represents a glottal-shape codebook index and *G(z)* is a shaping filter;

Figure 8 is a graphical representation of the computation of *Ck'*, the square root of the numerator in the criterion of Equation (16), wherein shaded portions of the vector/matrix are non-zero;

Figure 9 is a graphical representation of the computation of *Ek'*, the denominator of the criterion of Equation (16) ), wherein shaded portions of the vector/matrix are non-zero;

Figure 10 is a graphical representation of the computation of the convolution matrix $Z^T$ ; in this example the shaping filter *G(z)* has only three (3) non-zero coefficients ($L_{1/2}$ = 1);

Figure 11 is a schematic block diagram of an example of *TM* portion of a *CELP* decoder;

Figure 12a is a schematic block diagram an example of structure of the filter *Q(z)*;

Figure 12b is a graph of an example of glottal-shape codevector modification, wherein the repeated impulse is dotted;

Figure 13 is a schematic block diagram of the *TM* portion of a *CELP* encoder including the filter *Q(z)*;

Figure 14 is a graph illustrating a glottal-shape codevector with two-impulses construction when an adaptive codebook search is used in a part of the subframe with a glottal-shape codebook search;

Figure 15 is a graph illustrating a glottal-shape codevector construction in the case where the second glottal impulse appears in the first $L_{1/2}$ positions of the next subframe;

Figure 16 is a schematic block diagram of the *TM* portion of an encoder used in a *EV-VBR* (Embedded Variable Bit Rate) codec implementation;

Figure 17a is a graph showing an example of speech signal in the time domain;

Figure 17b is a graph showing a *LP* residual signal corresponding to the speech signal of Figure 17a;

Figure 17c is a graph showing a first-stage excitation signal in error-free conditions;

Figures 18a-18c are graphs illustrating an example of onset construction comparison, wherein the graph of Figure 18a represents the input speech signal, the graph of Figure 18b represents the output synthesized speech of a *EV-VBR* codec without the *TM* coding technique, and the graph of Figure 18c represents the output synthesized speech of a *EV-VBR* codec with the *TM* coding technique;

Figure 19a-19c are graphs illustrating an example of the effect of the *TM* coding technique in the case of frame erasure, wherein the graph of Figure 19a represents the input speech signal, the graph of Figure 19b represents the output synthesized speech of a *EV-VBR* codec without the *TM* coding technique, and the graph of Figure 19c represents the output synthesized speech of a *EV-VBR* codec with the *TM* coding technique;

Figure 20 is a graph illustrating an example of the first-stage excitation signal in one frame of the configuration TRANSITION_1_1;

Figure 21 is a graph illustrating an example of the first-stage excitation signal in one frame of the configuration TRANSITION_1_2;

Figure 22 is a graph illustrating an example of the first-stage excitation signal in one frame of the configuration TRANSITION_1_3;

Figure 23 is a graph illustrating an example of the first-stage excitation signal in one frame of the configuration TRANSITION_1_4;

Figure 24 is a graph illustrating an example of the first-stage excitation signal in one frame of the configuration TRANSITION_2;

Figure 25 is a graph illustrating an example of the first-stage excitation signal in one frame of the configuration TRANSITION_3;

Figure 26 is a graph illustrating an example of the first-stage excitation signal in one frame of the configuration TRANSITION_4; and

Figure 27 is a schematic block diagram of a speech communication system illustrating the use of speech encoding and decoding devices.

## DETAILED DESCRIPTION

The non-restrictive illustrative embodiment of the present invention is concerned with a method and device whose purpose is to overcome error propagation in the above described situations and increase the coding efficiency.
More specifically, the method and device according to the non-restrictive illustrative embodiment of the present invention implement a special encoding, called transition mode (*TM*) encoding technique, of transition frames and frames following the transition in a sound signal, for example a speech or audio signal. The *TM* coding technique replaces the adaptive codebook of the *CELP* codec by a new codebook of glottal impulse shapes, hereinafter designated as glottal-shape codebook, in transition frames and in frames following the transition. The glottal-shape codebook is a fixed codebook independent of the past excitation. Consequently, once a frame erasure is over, the encoder and the decoder use the same excitation whereby convergence to clean-channel synthesis is quite rapid.
While the use of the *TM* coding technique in frames following a transition helps to prevent error propagation in the case the transition frame is lost, another purpose of using the *TM* coding technique also in the transition frame is to improve the coding efficiency. For example, just before a voiced onset, the adaptive codebook usually contains a noise-like signal not very efficient for encoding the beginning of a voiced segment. The idea behind the *TM* coding technique is thus to supplement the adaptive codebook with a better codebook populated with simplified quantized versions of glottal impulses to encode the voiced onsets.

The proposed *TM* coding technique can be used in any *CELP*-type codec or predictive codec. As an example, the *TM* coding technique is implemented in a candidate codec in *ITU-T* standardization activity for an Embedded Variable Bit Rate Codec that will be referred to in the remaining of the text as *EV-VBR* codec. Although the non-restrictive illustrative embodiment of the present invention will be described in connection with the *EV-VBR* codec framework, it should be kept in mind that the principles and concepts of the present invention are not limited to an application to the *EV-VBR* codec but to any other codec using predictive coding. Also, although the non-restrictive illustrative embodiment of the present invention will be described in connection with a speech signal, it should be kept in mind that the present invention is not limited to an application to speech signals but its principles and concepts can be applied to any other types of sound signals including audio signals.

A speech frame can be roughly classified into one of the four (4) following speech classes (this will be explained in more detail in the following description):

- Inactive frames characterized by the absence of speech activity;

- Unvoiced speech frames characterized by an aperiodic structure and energy concentration toward higher frequencies;

- Voiced speech frames having a clear quasi-periodic nature with energy concentrated mainly in low frequencies; and

- Any other frame classified as a transition having rapidly varying characteristics.

In the *EV-VBR* codec, a specialized coding mode has been designed for each of the classes. It can be generally stated that the inactive frames are processed through comfort noise generation, the unvoiced speech frames through an optimized unvoiced encoding mode, the voiced speech frames through an optimized voiced encoding mode and all other frames are processed with a generic Algebraic *CELP* (*ACELP*) technology. In the *EV-VBR* codec framework, the *TM* coding technique is thus introduced as yet another encoding mode in the *EV-VBR* encoding scheme to encode transition frames and frames following the transition.

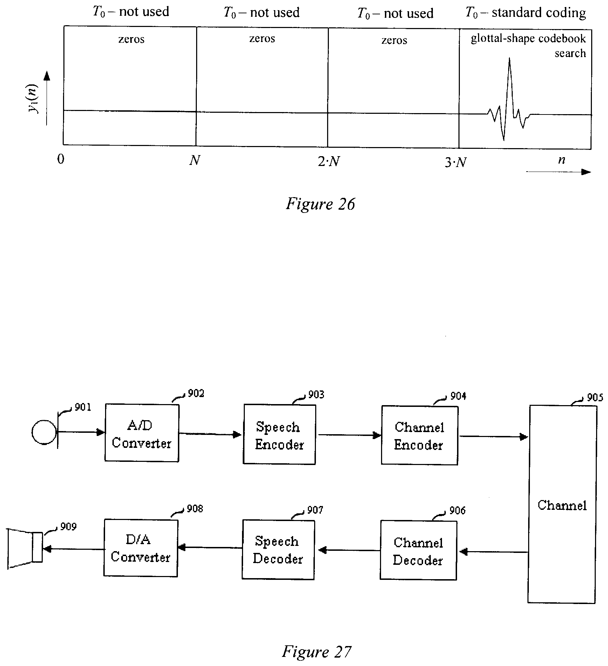

Figure 27 is a schematic block diagram of a speech communication system depicting the use of speech encoding and decoding. The speech communication system supports transmission and reproduction of a speech signal across a communication channel 905. Although it may comprise, for example, a wire, optical or fiber link, the communication channel 905 typically comprises at least in part a radio frequency link. The radio frequency link often supports multiple, simultaneous speech communications requiring shared bandwidth resources such as may be found with cellular telephony. Although not shown, the communication channel 905 may be replaced by a storage device in a single device embodiment of the communication system that records and stores the encoded speech signal for later playback.

Still referring to Figure 27, a microphone 901 produces an analog speech signal that is supplied to an analog-to-digital (*AID*) converter 902 for converting it into a digital form. A speech encoder 903 encodes the digital speech signal thereby producing a set of encoding parameters that are coded into a binary form and delivered to a channel encoder 904. The optional channel encoder adds redundancy to the binary representation of the coding parameters before transmitting them over the communication channel 905. On the receiver side, a channel decoder 906 utilizes the above mentioned redundant information in the received bit stream to detect and correct channel errors that have occurred in the transmission. A speech decoder 907 converts the bit stream received from the channel decoder 906 back to a set of encoding parameters for creating a synthesized digital speech signal. The synthesized digital speech signal reconstructed in the speech decoder 907 is converted to an analog form in a digital-to-analog (D/A) converter 908 and played back in a loudspeaker unit 909.

**Short Background on CELP**

A speech codec consists of two basic parts: an encoder and a decoder. The encoder digitizes the audio signal, chooses a limited number of encoding parameters representing the speech signal and converts these parameters into a digital bit stream that is transmitted to the decoder through a communication channel. The decoder reconstructs the speech signal to be as similar as possible to the original speech signal. Presently, a widespread speech encoding technique is based on Linear Prediction (*LP*), and more specifically on *CELP* technology. In *LP*-based coding, the speech signal is synthesized by filtering an excitation signal through an all-pole synthesis filter 1/A($z$). In *CELP,* the excitation is typically composed of two parts, a first stage excitation signal is selected from an adaptive codebook and a second stage excitation signal is selected from a fixed codebook. Generally speaking, the adaptive codebook excitation models the periodic part of the excitation and the fixed codebook excitation is added to model the evolution of the speech signal.

The speech is normally processed by frames of typically 20 ms and the *LP* filter coefficients are transmitted once per frame. In *CELP,* every frame is further divided in several subframes to encode the excitation signal. The subframe length is typically 5 ms.

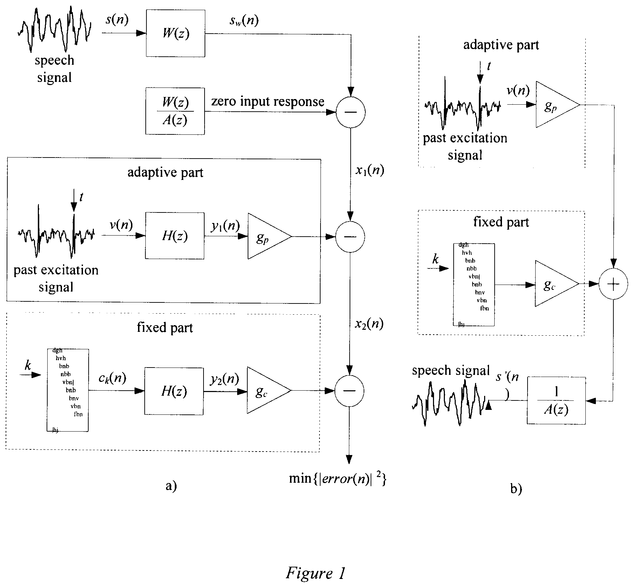

Referring to Figures 1 a and 1 b, the main principle behind *CELP* is called Analysis-by-Synthesis where possible decoder outputs are tried (synthesis) already during the encoding process (analysis) and then compared to the original speech signal. The search minimizes a mean-squared error between the input speech signal *s(n)* and the synthesized speech signal *s'(n)* in a perceptually weighted domain, where discrete time index *n* = 0, 1, ..., *N-1,* and *N* is the length of the subframe. The perceptual weighting filter *W(z)* exploits the frequency masking effect and is typically derived from the *LP* filter. An example of perceptual weighting filter *W(z)* is given in the following Equation (1):

$$W(z) = \frac{A(z / \gamma_1)}{A(z / \gamma_2)} , \qquad\qquad (1)$$

where factors $\gamma_1$ and $\gamma_2$ control the amount of perceptual weighting and holds the relation $0 < \gamma_2 < \gamma_1 \leq 1$. This traditional perceptual weighting filter works well for *NB* (narrowband - bandwidth of 200 - 3400 Hz) signals. An example of perceptual weighting filter for *WB* (wideband - bandwidth of 50 - 7000 Hz) signals can be found in Reference [1].

The bit stream transmitted to the decoder contains for the voiced frames the following encoding parameters: the quantized parameters of the *LP* synthesis filter, the adaptive and fixed codebook indices and the gains of the adaptive and fixed parts.

**Adaptive Codebook Search**

The adaptive codebook search in CELP-based codecs is performed in weighted speech domain to determine the delay (pitch period) *t* and the pitch gain $g_p$, and to construct the quasi-periodic part of the excitation signal referred to as adaptive codevector *v(n).* The pitch period is strongly dependent on the particular speaker and its accurate determination critically influences the quality of the synthesized speech.

In a *EV-VBR* codec, a three-stage procedure is used to determine the pitch period and gain. In the first stage, three open-loop pitch estimates $T_{op}$ are computed for each frame - one estimate for each 10 ms half-frame and one for a 10 ms look-ahead - using the perceptually weighted speech signal $s_w(n)$ and normalized correlation computing. In the second stage, a closed-loop pitch search is performed for integer periods around the estimated open-loop pitch periods $T_{op}$ for every subframe. Once an optimum integer pitch period is found, a third search stage goes through the fractions around that optimum integer value. The closed-loop pitch search is performed by minimizing the mean-squared weighted error between the original and synthesized speech. This is achieved by maximizing the term

$$\Im_t = \frac{\left(\sum_{n=0}^{N-1} x_1(n)y_1(n)\right)^2}{\sum_{n=0}^{N-1} y_1(n)y_1(n)} , \qquad\qquad (2)$$

where $x_1(n)$ is the target signal and the first stage contribution signal (also called filtered adaptive codevector) $y_1(n)$ is computed by the convolution of the past excitation signal *v(n)* at period *t* with the impulse response *h(n)* of the weighted synthesis filter H(z)

$$y_1(n) = v(n) * h(n) . \qquad\qquad (3)$$

The perceptually weighted input speech signal $s_w(n)$ is obtained by processing the input speech signal *s(n)* through the perceptual weighting filter *W(z)*. The filter *H(z)* is formed by the cascade of the *LP* synthesis filter 1/A(z) and the perceptual weighting filter *W(z)*. The target signal $x_1(n)$ corresponds to the perceptually weighted input speech signal $s_w(n)$ after subtracting therefrom the zero-input response of the filter *H(z)*.

The pitch gain is found by minimizing the mean-squared error between the signal $x_1(n)$ and the first stage contribution signal $y_1(n)$. The pitch gain is expressed by the following Equation:

$$g_p = \frac{\displaystyle\sum_{n=0}^{N-1} x_1(n)y_1(n)}{\displaystyle\sum_{n=0}^{N-1} y_1(n)y_1(n)} . \tag{4}$$

The pitch gain is then bounded by $0 \leq g_p \leq 1.2$ and typically jointly quantized with the fixed codebook gain once the innovation is found.

In *CELP*-based codecs, the excitation signal in the beginning of the currently processed frame is thus reconstructed from the excitation signal from the previous frame. This mechanism is very efficient for voiced segments of the speech signal where the signal is quasi-periodic, and in absence of transmission errors. In case of frame erasure, the excitation signal from the previous frame is lost and the respective adaptive codebooks of the encoder and decoder are no longer the same. In frames following the erasure, the decoder then continues to synthesize the speech using the adaptive codebook with incorrect content. Consequently, a frame erasure degrades the synthesized speech quality not only during the erased frame, but it can also degrade the synthesized speech quality during several subsequent frames. The traditional concealment techniques are often based on repeating the waveform of the previous correctly-transmitted frame, but these techniques work efficiently only in the signal parts where the characteristics of the speech signal are quasi stationary, for example in stable voiced segments. In this case, the difference between the respective adaptive codebooks of the encoder and decoder are often quite small and the quality of the synthesized signal is not much affected. However, if the erasure falls in a transition frame, the efficiency of these techniques is very limited. In communication systems using *CELP*-based codecs, where the Frame Erasure Rate (*FER*) is typically 3% to 5%, the synthesized speech quality then drops significantly.

Even in clean channel transmission, the efficiency of the adaptive codebook is limited in transition frames; the *CELP* encoder makes use of the adaptive codebook to exploit the periodicity in speech that is low or missing during transitions whereby the coding efficiency runs down. This is the case of voiced onsets in particular where the past excitation signal and the optimal excitation signal for the current frame are correlated very weakly or not at all.

**Fixed Codebook Search**

The objective of the contribution of the Fixed (innovation) CodeBook (*FCB*) search in *CELP*-based codecs is to minimize the residual error after the use of the adaptive codebook, i.e.

$$\min_k \left\{ \sum_{n=0}^{N-1} \left[ x_2(n) - g_c \cdot y_2^{(k)}(n) \right]^2 \right\}, \tag{5}$$

where $g_c$ is the fixed codebook gain, and the second stage contribution signal (also called as the filtered fixed codevector) $y_2^{(k)}(n)$ is the fixed codebook vector $c_k(n)$ convolved with *h(n)*. The target signal $x_1(n)$ is updated by subtracting the adaptive codebook contribution from the adaptive codebook target to obtain:

$$x_2(n) = x_1(n) - g_p y_1(n) . \tag{6}$$

The fixed codebook can be realized for example by using an algebraic codebook as described in Reference [2]. If $\mathbf{c}_k$ denotes the algebraic code vector at index *k*, then the algebraic codebook is searched by maximizing the following criterion:

$$\Im_k = \frac{\left(\mathbf{x}_2^T \mathbf{y}_2\right)^2}{\mathbf{y}_2^T \mathbf{y}_2} = \frac{\left(\mathbf{x}_2^T \mathbf{H} \mathbf{c}_k\right)^2}{\mathbf{c}_k^T \mathbf{H}^T \mathbf{H} \mathbf{c}_k} = \frac{\left(\mathbf{d}^T \mathbf{c}_k\right)^2}{\mathbf{c}_k^T \mathbf{\Phi} \mathbf{c}_k} = \frac{\left(C_k\right)^2}{E_k} , \tag{7}$$

where *H* is the lower triangular Toeplitz convolution matrix with diagonal *h*(0) and lower diagonals *h*(1), ..., *h*(*N*-1). Vector $d = \mathbf{H}^T \mathbf{x_2}$ is the correlation between the updated target signal $x_2(n)$ and *h(n)* (also known as backward filtered target

vector), and matrix $\Phi = \mathbf{H}^T\mathbf{H}$ is the matrix of correlations of $h(n)$. The superscript $^T$ denotes matrix or vector transpose. Both $\boldsymbol{d}$ and $\Phi$ are usually computed prior to the fixed codebook search. Reference [1] discusses that, if the algebraic structure of the fixed codebook contains only a few non-zero elements, a computation of the maximization criterion for all possible indexes k is very fast. A similar procedure is used in the transition mode (*TM*) encoding technique as will be seen below.

*CELP* is believed to be otherwise well known to those of ordinary skill in the art and, for that reason, will not be further described in the present specification.

**Frame Classification in the *EV-VBR* codec**

The frame classification in the *EV-VBR* codec is based on *VMR-WB* (Variable Rate Multi-Mode Wideband) classification as described in Reference *[3]*. *VMR-WB* classification is done with the consideration of the concealment and recovery strategy. In other words, any frame is classified in such a way that the concealment can be optimal if the following frame is missing, or that the recovery can be optimal if the previous frame was lost. Some of the classes used for frame erasure concealment processing need not be transmitted, as they can be deduced without ambiguity at the decoder. Five distinct classes are used, and defined as follows:

**[0044]** - *UNVOICED* class comprises all unvoiced speech frames and all frames without active speech. A voiced offset frame can be also classified as *UNVOICED* if its end tends to be unvoiced and the concealment designed for unvoiced frames can be used for the following frame in case it is lost.

**[0045]** - *UNVOICED TRANSITION* class comprises unvoiced frames with a possible voiced onset at the end. The voiced onset is however still too short or not built well enough to use the concealment designed for voiced frames. An *UNVOICED TRANSITION* frame can follow only a frame classified as *UNVOICED* or *UNVOICED TRANSITION.*

**[0046]** - *VOICED TRANSITION* class comprises voiced frames with relatively weak voiced characteristics. Those are typically voiced frames with rapidly changing characteristics (transitions between vowels) or voiced offsets lasting the whole frame. A *VOICED TRANSITION* frame can follow only a frame classified as *VOICED TRANSITION, VOICED* or *ONSET.*

**[0047]** - *VOICED* class comprises voiced frames with stable characteristics. A *VOICED* frame can follow only a frame classified as *VOICED TRANSITION, VOICED* or *ONSET.*

**[0048]** - *ONSET* class comprises all voiced frames with stable characteristics following a frame classified as *UNVOICED* or *UNVOICED TRANSITION.* Frames classified as *ONSET* correspond to voiced onset frames where the onset is already sufficiently well built for the use of the concealment designed for lost voiced frames. The concealment techniques used for a frame erasure following a frame classified as *ONSET* are in traditional *CELP*-based codecs the same as following a frame classified as *VOICED,* the difference being in the recovery strategy when a special technique can be used to artificially reconstruct the lost onset. According to the non-restrictive illustrative embodiment of the present invention, the *TM* coding technique is successfully used in this case.

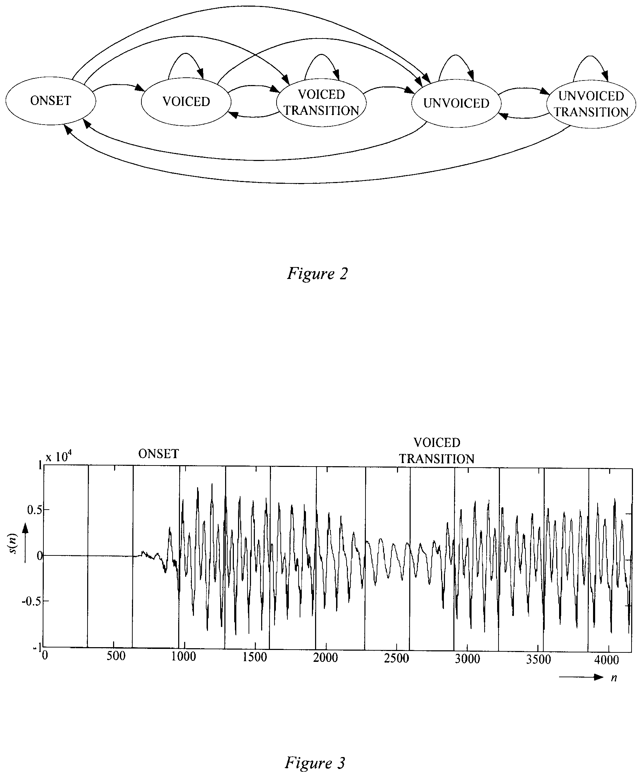

The classification state diagram is outlined in Figure 2. The classification information is transmitted using 2 bits. As it can be seen from Figure 2, the *UNVOICED TRANSITION* class and *VOICED TRANSITION* class can be grouped together as they can be unambiguously differentiated at the decoder (an *UNVOICED TRANSITION* frame can follow only *UNVOICED* or *UNVOICED TRANSITION* frames, a *VOICED TRANSITION* frame can follow only *ONSET, VOICED* or *VOICED TRANSITION* frames).

The following parameters are used for the classification: a normalized correlation $\overline{R}'_{xy}$, a spectral tilt measure $e'_t$, a pitch stability counter $pc$, a relative frame energy of the speech signal at the end of the current frame $E_{rel}$ and a zero-crossing counter $zc$. As can be seen in the following detailed analysis, the computation of these parameters uses a lookahead. The lookahead allows the evolution of the speech signal in the following frame to be estimated and, consequently, the classification can be done by taking into account the future speech signal behaviour.

The average normalized correlation $\overline{R}'_{xy}$ is computed as a mean of the maximum normalized correlation of the second half-frame and the lookahead using the following Equation:

$$\overline{R}'_{xy} = 0.5(C_{norm}(d_1) + C_{norm}(d_2)). \tag{8}$$

The maximum normalized correlations $C_{norm}$ are computed as a part of the open-loop pitch search and correspond to the maximized normalized correlations of two adjacent pitch periods of the weighted speech signal.

The spectral tilt parameter $e'_t$ contains the information about the frequency distribution of energy. The spectral tilt for one spectral analysis is estimated as a ratio between the energy concentrated in low frequencies and the energy concentrated in high frequencies. Here, the tilt measure used is the average in the logarithmic domain of the spectral

tilt measures $e_{tilt}(0)$ and $e_{tilt}(1)$ defined as a low and high frequency energies ratio. That is:

$$e'_t = 10\log(e_{tilt}(0)e_{tilt}(1)).$$

(9)

The pitch stability counter $pc$ assesses the variation of the pitch period. It is computed as follows:

$$pc = |T_{op1} - T_{op0}| + |T_{op2} - T_{op0}|.$$

(10)

The values $T_{op0}$, $T_{op1}$, and $T_{op2}$ correspond to the open-loop pitch estimates from the first half of the current frame, the second half of the current frame and the lookahead, respectively.

The relative frame energy $E_{rel}$ is computed as a difference in dB between the current frame energy and the long-term active-speech energy average.

The last parameter is the zero-crossing parameter zc computed on a 20 ms segment of the speech signal. The segment starts in the middle of the current frame and uses two subframes of the lookahead. Here, the zero-crossing counter zc counts the number of times the speech signal sign changes from positive to negative during that interval.

To make the classification more robust, the classification parameters are considered together forming a function of merit $f_m$. For that purpose, the classification parameters are first scaled between 0 and 1 so that parameter's value typical for unvoiced speech signal translates into 0 and each parameter's value typical for voiced speech signal translates into 1. A linear function is used between them. The scaled version $p^s$ of a certain parameter $p_x$ is obtained using the Equation:

$$p^s = k_p p_x + c_p \qquad \text{constrained by} \qquad 0 \le p^s \le 1.$$

(11)

The function coefficients $k_p$ and $c_p$ have been found experimentally for each of the parameters so that the signal distortion due to the concealment and recovery techniques used in presence of frame errors is minimal. The values used are summarized in Table 1.

*Table 1 - Signal Classification Parameters and the coefficients of their respective scaling functions.*

| Parameter | Meaning | $k_p$ | $c_p$ |
|---|---|---|---|
| $\overline{R}'_{xy}$ | Normalized Correlation | 2.857 | -1.286 |
| $e'_t$ | Spectral Tilt | 0.04167 | 0 |
| $pc$ | Pitch Stability counter | -0.07143 | 1.857 |
| $E_{rel}$ | Relative Frame Energy | 0.05 | 0.45 |
| zc | Zero Crossing Counter | -0.04 | 2.4 |

Then the function of merit $f_m$ has been defined as:

$$f_m = \frac{1}{6}(2\overline{R}_{xy}^s + e_t^s + pc^s + E_{rel}^s + zc_s),$$

(12)

where the superscript s indicates the scaled version of the parameters.

A first classification decision is made for the *UNVOICED* class as follows:

*If (local_VAD=0) OR ($E_{rel}$<-8) then class = UNVOICED.*

(13)

where local_VAD stands for local Voice Activity Detection.

If the above condition (13) is not satisfied, then the classification proceeds using the function of merit $f_m$ and

following the rules summarized in Table 2.

*Table 2 - Signal Classification Rules at the Encoder.*

| Previous Frame Class | Rule | Current Frame Class |
|---|---|---|
| ONSET | $f_m \geq 0.66$ | VOICED |
| VOICED | $0.66 > f_m \geq 0.49$ | VOICED TRANSITION |
| VOICED TRANSITION | $f_m < 0.49$ | UNVOICED |
| UNVOICED TRANSITION UNVOICED | $f_m > 0.63$ | ONSET |
| | $0.63 \geq f_m > 0.585$ | UNVOICED TRANSITION |
| | $f_m \leq 0.585$ | UNVOICED |

The class information is encoded with two bits as explained herein above. Despite the fact that the supplementary information, which improves frame erasure concealment, is transmitted only in Generic frames, the classification is performed for each frame. This is needed to maintain the classification state machine up to date as it uses the information about the class of the previous frame. The classification is however straightforward for encoding types dedicated to *UNVOICED* or *VOICED* frames. Hence, voiced frames are always classified as *VOICED* and unvoiced frames are always classified as *UNVOICED.*

**Frame Selection for *TM* coding**

As discussed previously, the technique being described replaces the adaptive codebook in CELP-based coders by a glottal-shape codebook to improve the robustness to frame erasures and to enhance the coding efficiency when non-stationary speech frames are processed. This means that this technique does not construct the first stage excitation signal with the use of the past excitation, but selects the first stage excitation signal from the glottal-shape codebook. The second stage excitation signal (the innovation part of the total excitation) is still selected from the traditional *CELP* fixed codebook. Any of these codebooks use no information from the past (previously transmitted) speech frames, thereby eliminating the main reason for frame error propagation inherent to CELP-based encoders.

Using the *TM* coding technique systematically (to encode all frames) would greatly limit the error propagation, but the coding efficiency and the synthesized speech quality would drop in error-free conditions. As a compromise between the clean-channel performance of the codec and its robustness to channel errors, the *TM* coding technique can be applied only to the transition frames and to several frames following each transition frame. For frame erasure robustness, the *TM* coding technique can be used for voiced speech frames following transitions. As introduced previously, these transitions comprise basically the voiced onsets and the transitions between two different voiced sounds. To select pertinent frames to be encoded using the *TM* coding technique, transitions are detected. While any detector of transitions can be used, the non-restrictive illustrative embodiment uses the classification of the *EV-VBR* framework as described herein above.

The *TM* coding technique can be applied to encode transition (voiced onset or transition between two different voiced sounds) frames as described above and several subsequent frames. The number of *TM* frames (frames encoded using the *TM* coding technique) is a matter of compromise between the codec performance in clean-channel conditions and in conditions with channel errors. If only the transition (voiced onset or transition between two different voiced sounds) frames are encoded using the *TM* coding technique, the encoding efficiency increases. This increase can be measured by the increase of the segmental signal-to-noise ratio (*SNR*), for example. The *SNR* is computed using the following Equation:

$$SNR = \frac{E_{sd}}{E_e}, \qquad\qquad (14)$$

where $E_{sd}$ is the energy of the input speech signal of the current frame and $E_e$ is the energy of the error between this input speech signal and the synthesis speech signal of the current frame.

However, using the *TM* coding technique to encode only the transition frames does not help too much for error robustness; if the transition (voiced onset or transition between two different voiced sounds) frame is lost, the error will propagate as the following frames would be coded using the standard *CELP* procedure. On the other hand, if the frame preceding the transition (voiced onset or transition between two different voiced sounds) frame is lost, the effect of this lost preceding frame on the performance is not critical even without the use of the *TM* coding technique. In the case of voiced onset transitions, the frame preceding the onset is likely to be unvoiced and the adaptive codebook contribution is not much important. In the case of a transition between two voiced sounds, the frame before the transition is generally fairly stationary and the adaptive codebook state in the encoder and the decoder are often similar after the frame erasure.

To increase the robustness, frames following the transition (voiced onset or transition between two different voiced sounds) can be encoded using the *TM* coding technique. If the clean-channel performance enhancement is not important, the *TM* coding technique can be used only in the frames following the transition frames. Basically, the number of consecutive *TM* frames depends on the number of consecutive frame erasures one wants to consider for protection. If only isolated erasures are considered (i.e. one isolated frame erasure at a time), it is sufficient to encode only the frame following the transition (voiced onset or transition between two different voiced sounds) frame. If the transition (voiced onset or transition between two different voiced sounds) frame is lost, the following frame is encoded without the use of the past excitation signal and the error propagation is broken. It should be pointed out, however, that if the transition (voiced onset or transition between two different voiced sounds) frame is transmitted correctly but the following frame is lost, the error propagation would not be prevented as the next frame is already using classical *CELP* encoding. However, the distortion will likely be limited if at least one pitch period is already well built at the end of the transition (voiced onset or transition between two different voiced sounds) as shown in Figure 3.

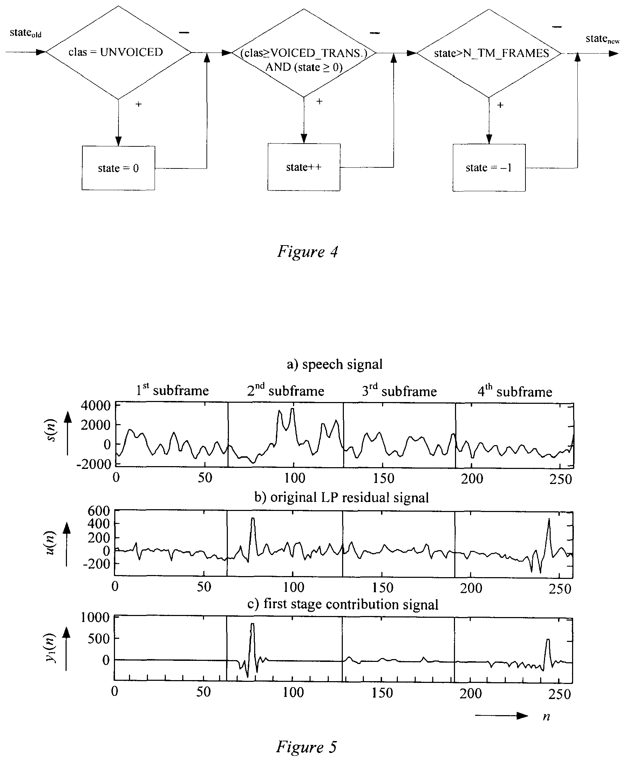

When an implementation of the *TM* coding technique is done into some existing codec and the class of the current frame and the coding mode are known, the following scheme to set the onset and the following frames for *TM* coding can be used. A parameter *state* that is a counter of the consecutive *TM* frames previously used is stored in the encoder state memory. If the value of this parameter *state* is negative, *TM* coding cannot be used. If the parameter *state* is not negative but lower or equal to the number of consecutive frame erasures to protect, and the class of the frame is *ONSET, VOICED* or *VOICED TRANSITION,* the frame is denoted as *TM* frame (see Figure 4 for more detail). In other words, the frame is denoted as *TM* frame if N_TM_FRAMES $\geq$ *state* > 0, where N_TM_FRAMES is a number of consecutive frames to prevent using the *TM* coding technique.

If it is expected that the communication channel characteristics are such that more than one isolated frame are often erased at a time, i.e. that the frame erasures have the tendency to appear in bundles, the best solution might be to use the *TM* coding technique to protect two or even more consecutive frame erasures. However, the coding efficiency in clean-channel conditions will drop. If a feedback about the channel is available in the encoder, the number of the consecutive *TM* frames might be made adaptive to the conditions of transmission. In the non-restrictive illustrative embodiment of the present invention, up to two *TM* frames following the transition (voiced onset or transition between two different voiced sounds) frame are considered, which corresponds to a design able to cope with up to two consecutive frame erasures.

The above described decision uses basically a fixed number (whether this number is fixed before the transmission or is dependent on channel conditions of transmission) of *TM* frames following the transition (voiced onset or transition between two different voiced sounds) frame. The compromise between the clean-channel performance and the frame-error robustness can be also based on a closed-loop classification. More specifically, in the frame that one wants to protect against the previous frame erasure or wants to decide if it is the onset frame, a computation of the two possible coding modes is done in parallel; the frame is processed both using the generic *(CELP)* coding mode and the *TM* coding technique. Performance of both approaches is then compared using a *SNR* measure, for example; for more details the following Section entitled "*TM* coding Technique Performance in *EV-VBR* Codec". When the difference between the *SNR* for the generic *(CELP)* coding mode and the *SNR* for the *TM* coding technique is greater than a given threshold, the generic (*CELP*) coding mode is applied. If the difference between the *SNR* for the generic (*CELP*) coding mode and the *SNR* for the *TM* coding technique is smaller than the given threshold, the *TM* coding technique is applied. The value of the threshold is chosen depending on how strong the frame erasure protection and onset coding determination is required.

**Subframe Selection for Glottal-Shape Codebook Search**

In the previous Section, the reasons and mechanisms for selecting frames for coding using the *TM* coding technique was described. Now it will be shown that it is generally more efficient not to use the glottal-shape codebook in all subframes in order to achieve the best compromise between the clean-channel performance at a given bitrate and the performance in presence of an erasure in the frames preceding the *TM* frames. First, the glottal-shape codebook search is important only in the first pitch-period in a frame. The following pitch periods can be encoded using the more efficient standard adaptive codebook search since they no longer use the excitation of the past frame (when the adaptive codebook is searched, the excitation is searched up to about one pitch period in the past). There is consequently no reason to employ the glottal-shape codebook search in subframes containing no portion of the first pitch period of a frame.

Similarly, when the glottal-shape codebook search is used to increase the encoding efficiency in voiced onset frames, this glottal-shape codebook search is used on the first pitch period of the starting voiced segment. The reason is that for the first pitch period, the adaptive codebook contains a noise-like signal (the previous segment was not voiced) and replacing it with a quantized glottal impulse often increases the coding efficiency. For the following pitch periods however, the periodic excitation has already built up in the adaptive codebook and using this codebook will yield better results. For this reason, the information on the voiced onset position is available at least with subframe resolution.

Further optimization of the bit allocation concerns frames with pitch periods longer than the subframe length. Given that the glottal-shape codebook contains quantized shapes of the glottal impulse, the codebook is best suited to be used in subframes containing the glottal impulse. In other subframes, its efficiency is low. Given that the bit rate is often quite limited in speech encoding applications and that the encoding of the glottal-shape codebook requires a relatively larger number of bits for low bit rate speech encoding, a bit allocation where the glottal-shape codebook is used and searched only in one subframe per frame was chosen in the non-restrictive, illustrative embodiment.

To choose the subframe to be encoded with the glottal-shape codebook, the first glottal impulse in the LP residual signal is looked for. The following simple procedure can be used. The maximum sample in the LP residual signal is searched in the range $[0, 0 + T_{op}+2]$, where $T_{op}$ is the open-loop pitch period for the first half-frame and 0 corresponds to the frame beginning. In the case of voiced onset frames, and if the beginning of the onset can be reliably determined, 0 denotes the beginning of the subframe where the onset beginning is located. The glottal-shape codebook will be then employed in the subframe with the maximum residual signal energy. Moreover the position of the maximum gives information where the glottal impulse position can approximately be situated and this situation can be exploited for complexity reduction as will be discussed later. Note that as the glottal-shape codebook search replaces only the adaptive codebook search, a fixed codebook search is done in every subframe of a *TM* frame.

The other subframes (not encoded with the use of the glottal-shape codebook) will be processed as follows. If the subframe using glottal-shape codebook search is not the first subframe in the frame, the excitation signal in preceding subframe(s) of the frame is encoded using the fixed *CELP* codebook only; this means that the first stage excitation signal is zero. If the glottal-shape codebook subframe is not the last subframe in the frame, the following subframe(s) of the frame is/are processed using standard *CELP* encoding (i.e. using the adaptive and the fixed codebook search). In Figures 5a-5c, the situation is shown for the case where the first glottal impulse emerges in the 2nd subframe. In Figure 5b, *u(n)* is the LP residual signal. The first stage excitation signal is denoted $q_{k'}(n)$ when it is built using the glottal-shape codebook, or *v(n)* when it is built using the adaptive codebook. In this example (Figure 5c), the first stage excitation signal is zero in the 1st subframe, it is a glottal-shape codevector in the 2nd subframe and a adaptive codebook vector in the last two subframes.

In order to further increase coding efficiency and to optimize bit allocation, different processing is used in particular subframes of a *TM* frame dependent on the pitch period. When the first subframe is chosen as *TM* subframe, the subframe with the 2nd glottal impulse in the *LP* residual signal is determined. This determination is based on the pitch period value and the following four situations then can occur. In the first situation, the 2nd glottal impulse is in the 1st subframe, and the 2nd, 3rd and 4th subframes are processed using standard *CELP* encoding (adaptive and fixed codebook search). In the second situation, the 2nd glottal impulse is in the 2nd subframe, and the 2nd, 3rd and 4th subframes are processed using again standard *CELP* encoding. In the third situation, the 2nd glottal impulse is in the 3rd subframe. The 2nd subframe is processed using fixed codebook search only as there is no glottal impulse in the 2nd subframe of the LP residual signal to be searched for using the adaptive codebook. The 3rd and 4th subframes are processed using standard *CELP* encoding. In the last (fourth) situation, the 2nd glottal impulse is in the 4th, subframe (or in the next frame), the 2nd and 3rd subframes are processed using the fixed codebook search only, and the 4th, subframe is processed using standard CELP encoding. More detailed discussion is provided in an exemplary implementation later below.

Table 3 shows names of the possible coding configurations and their occurrence statistics. In other words, Table 3 gives the distribution of the first and the second glottal impulse occurrence in each subframe for frames processed with the *TM* coding technique. Table 3 corresponds to the scenario where the *TM* coding technique is used to encode only the voiced onset frame and one subsequent frame. The frame length of the speech signal in this experiment was 20 ms, the subframe length 5 ms and the experiment was conducted using voices of 32 men and 32 women (if not mentioned differently, the same speech database was used also in all other experiments mentioned in the following description).

*Table 3 - Coding mode configurations for TM and their occurrence when speech signal is processed.*

| Coding configuration | Position(s) of the first (and the second if relevant) glottal impulse(s) | type of codebook used (GS = glottal-shape, A = adaptive, F = fixed) | | | | Quantity [%] |
|---|---|---|---|---|---|---|
| | | 1st subfr. | 2nd subfr. | 3rd subfr. | 4th subfr. | |
| TRANSITION_1_1 | | GS+F | A+F | A+F | A+F | 25.5 |
| TRANSITION_1_2 | | GS+F | A+F | A+F | A+F | 28.4 |
| TRANSITION_1_3 | | GS+F | F | A+F | A+F | 16.3 |
| TRANSITION_1_4 | | GS+F | F | F | A+F | 3.0 |
| TRANSITION_2 | | F | GS+F | A+F | A+F | 21.2 |
| TRANSITION_3 | | F | F | GS+F | A+F | 4.6 |
| TRANSITION_4 | | F | F | F | GS+F | 1.0 |

**Glottal-Shape Codebook**

In principle, the glottal-shape codebook consists of quantized normalized shapes of the glottal impulses placed at a specific position. Consequently, the codebook search consists both in the selection of the best shape, and in the determination of its best position in a particular subframe. In its simplest form, the shape of the glottal impulse can be represented by a unity impulse and does not need to be quantized. In that case, only its position in the subframe is determined. However the performance of such a simple codebook is very limited.

On the other hand, the best representation would be probably achieved if the length $L$ of the glottal-shape codebook entries corresponds to the length of the pitch period, and if a large number of glottal impulse shapes are represented. As the length and the shape of the glottal impulses vary from speaker to speaker and from frame to frame, the complexity and memory requirements to search and store such a codebook would be too extensive. As a compromise, the length of the glottal impulses as well as their number must be limited. In the non-restrictive illustrative embodiment, the glottal-shape codebook is composed of eight (8) different glottal impulse shapes and the length of each glottal impulse is $L$ = 17 samples. The quantized shapes have been selected such that the absolute maximum is around the middle of this length. During the glottal-shape codebook search, this middle is aligned with the index k' which represents the position of the glottal impulse in the current subframe and is chosen from the interval [0, $N$ - 1], $N$ being the subframe length. As the codebook entries length of 17 samples is shorter than the subframe length, the remaining samples are set to zero.

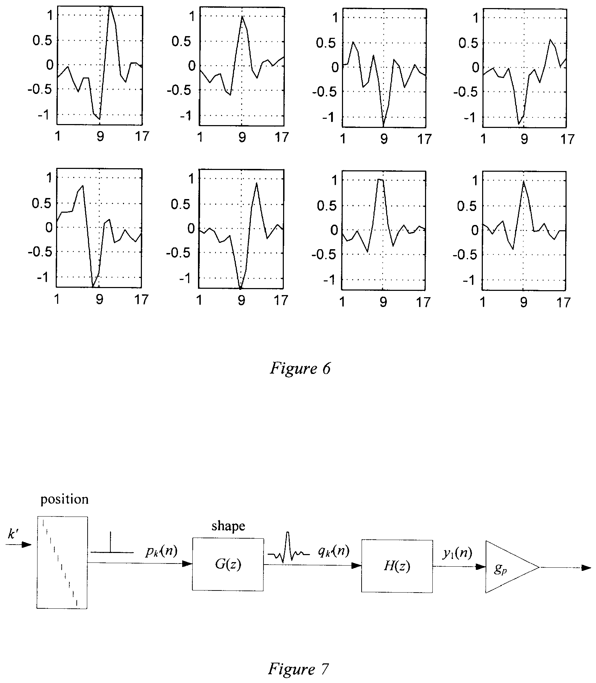

The glottal-shape codebook is designed to represent as many existent glottal impulses as possible. A training process based on the *k-means* algorithm [4] was used; the glottal-shape codebook was trained using more than three (3) hours of speech signal composed of utterances of many different speakers speaking in several different languages. From this database, the glottal impulses have been extracted from the *LP* residual signal and truncated to 17 samples around the maximum absolute value. From the sixteen (16) shapes selected by the *k-means* algorithm, the number of shapes has been further reduced to eight (8) shapes experimentally using a segmental *SNR* quality measure. The selected glottal-shape codebook is shown in Figure 6. Obviously, other means can be used to design the glottal-shape codebook.

**Glottal-Shape Codebook Search**

The actual realization of the glottal-shape codebook can be done in several ways. For example, the search can be performed similar to the fixed codebook search in *CELP*. In this case the codebook is constructed by placing the center of the glottal impulse shapes at all possible positions in the subframe. For instance, for a subframe length of sixty-four (64) samples and eight (8) glottal impulse shapes, a glottal-shape codebook of size 64×8=512 codevectors is obtained. In accordance with another example, similarly to the adaptive codebook search, the codebook entries can be successively placed at all potential positions in the past excitation and the best shape/position combination can be selected in a similar way as is used in the adaptive codebook search. In the latter realization all pitch cycle repeating is automatically done through the long-term *CELP* filter and the glottal impulses are represented with full-sized shapes (in contrast to the first realization where glottal-shape truncation is necessary in border cases as will be discussed later).

The non-restrictive illustrative embodiment uses the configuration where the codebook search is similar to the fixed codebook search in Algebraic *CELP* (*ACELP*). In this approach, for each of the candidate shapes, the shape is represented as an impulse response of a shaping filter $G(z)$. Thus the codevectors corresponding to glottal impulse shapes centered at different positions can be represented by codevectors containing only one non-zero element filtered through the shaping filter $G(z)$ (for a subframe size $N$ there are $N$ single-pulse vectors for potential glottal impulse positions $k'$).

Because of the glottal impulse position $k'$ is in the middle of the glottal shape with an odd length of $L$ samples and $k'$ is from the range [0, $N$-1], the glottal shape must be truncated for the first and for the last $L_{1/2}$ = ($L$-1)/2 samples. This will be taken into consideration during the glottal pulse search since it makes the shaping filter $G(z)$ a non-causal filter.

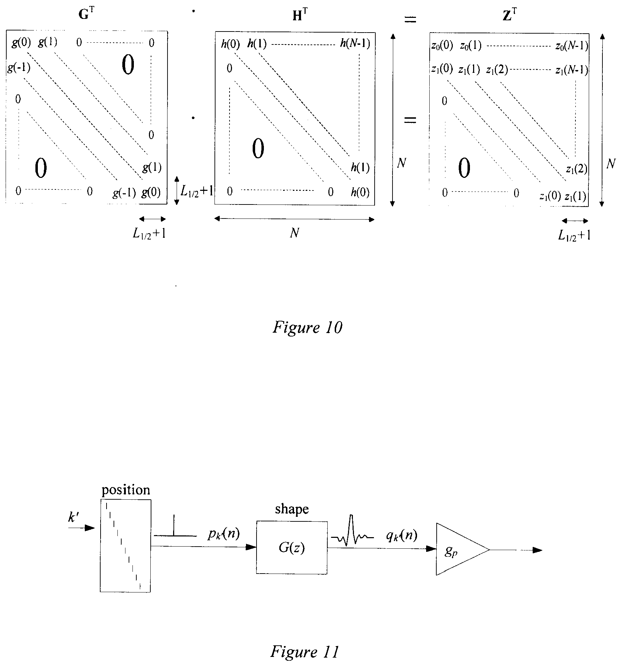

The configuration of the *TM* part is shown in Figure 7 for the encoder and in Figure 11 for the decoder. As already mentioned, the *TM* part replaces the adaptive codebook part of the encoder/decoder. During the search, the impulse response of the shaping filter $G(z)$ can be integrated to the impulse response of the filter $H(z)$.

A procedure and corresponding codebook searcher for searching the optimum glottal impulse center position $k'$ for a certain shape of the glottal impulse rendered by the shaping filter $G(z)$ will now be described. Because the shape of the filter $G(z)$ is chosen from several candidate shapes (eight (8) shapes are used in the non-restrictive illustrative embodiment as illustrated in Figure 6), the search procedure must be repeated for each glottal shape of the codebook in order to find the optimum impulse shape and position.

To determine *TM* coding parameters, the search determines the mean-squared error between the target vector $x_1$ and the glottal-shape codevector centered at position $k'$ that is filtered through the weighted synthesis filter $H(z)$. Similar to *CELP,* the search can be performed by finding the maximum of a criterion in the form:

$$\Im_{k'} = \frac{\left(\mathbf{x}_1^T \mathbf{y}_1\right)^2}{\mathbf{y}_1^T \mathbf{y}_1} , \qquad (15)$$

where $\mathbf{y}_1$ is the filtered glottal-shape codevector. Let $\mathbf{q}_{k'}$ denote the glottal-shape codevector centered at position $k'$ and $\mathbf{p}_{k'}$ a position codevector with one (1) non-zero element indicating the position $k'$, then $\mathbf{q}_{k'}$ can be written as $\mathbf{q}_{k'} = \mathbf{G} \cdot \mathbf{p}_{k'}$, where $\mathbf{G}$ is a Toeplitz matrix representing the shape of the glottal impulse. Therefore, similar to the fixed codebook search, the following Equation can be written:

$$\Im_{k'} = \frac{\left(\mathbf{x}_1^T \mathbf{y}_1\right)^2}{\mathbf{y}_1^T \mathbf{y}_1} = \frac{\left(\mathbf{x}_1^T \mathbf{H}\mathbf{q}_{k'}\right)^2}{\mathbf{q}_{k'}^T \mathbf{H}^T \mathbf{H}\mathbf{q}_{k'}} = \frac{\left(\mathbf{x}_1^T \mathbf{H}\mathbf{G}\mathbf{p}_{k'}\right)^2}{\mathbf{p}_{k'}^T \mathbf{G}^T \mathbf{H}^T \mathbf{H}\mathbf{G}\mathbf{p}_{k'}} =$$
$$= \frac{\left(\mathbf{x}_1^T \mathbf{Z}\mathbf{p}_{k'}\right)^2}{\mathbf{p}_{k'}^T \mathbf{Z}^T \mathbf{Z}\mathbf{p}_{k'}} = \frac{\left(\mathbf{d}_g^T \mathbf{p}_{k'}\right)^2}{\mathbf{p}_{k'}^T \mathbf{\Phi}_g \mathbf{p}_{k'}} = \frac{\left(C_{k'}\right)^2}{E_{k'}} , \qquad (16)$$

where $\boldsymbol{H}$ is the lower triangular Toeplitz convolution matrix of the weighted synthesis filter. As will be discussed later, the rows of the matrix $\boldsymbol{Z}^T$ correspond to the filtered shifted version of the glottal impulse shape or its truncated representation. Note that all vectors in this text are supposed column vectors (N x 1 matrices).

An example of matrix $\boldsymbol{G}$ in transpose form (*T*) for an impulse length of three (3) samples and $N$ = 4 would have the form:

$$\mathbf{G}^{\mathrm{T}} = \begin{bmatrix} g(0) & g(1) & 0 & 0 \\ g(-1) & g(0) & g(1) & 0 \\ 0 & g(-1) & g(0) & g(1) \\ 0 & 0 & g(-1) & g(0) \end{bmatrix}, \qquad (17)$$

where $g(n)$ are the coefficients of the impulse response of the non-causal shaping filter $G(z)$. In the following description, the coefficients of the non-causal shaping filter $G(z)$ are given by the values $g(n)$, for $n$ located within the range $[-L_{1/2}, L_{1/2}]$. Because of the fact that the position codevector $\boldsymbol{p}_{k'}$ has only one non-zero element, the computation of the criterion (16) is very simple and can be expressed using the following Equation:

$$\Im_{k'} = \frac{\left(d_g(k')\right)^2}{\Phi_g(k',k')} . \qquad (18)$$

As it can be seen from Equation (18), only the diagonal of the matrix $\Phi_g$ needs to be computed.

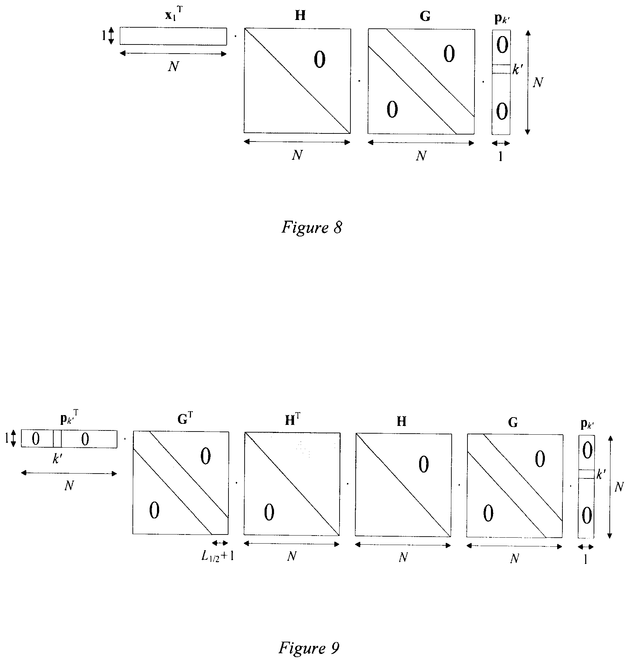

A graphical representation of computing the criterion (18) for one glottal-shape codevector is shown in Figures 8 and 9. As it has been already mentioned, the Equation (18) is typically used in the *ACELP* algebraic codebook search by precomputing the backward filtered target vector $d_g$ and the correlation matrix $\Phi_g$. However, given the non-causal nature of the shaping filter $G(z)$, this cannot be directly applied for the first $L_{1/2}$ positions. In these situations a more sophisticated search is used where some computed values can still be reused to maintain the complexity at a low level. This will be described hereinafter.

Let us denote $z_{k'}$ to be the $(k'+1)^{th}$ row of the matrix $\boldsymbol{Z}^T$, where the matrix $\boldsymbol{Z}^T$ (Figure 10) is computed as follows. Given the non-causal nature of the shaping filter G(z), the matrix $\boldsymbol{Z}^T$ is computed in two stages to minimize the computational complexity. The first $L_{1/2} + 1$ rows of this matrix are first computed. For the remaining part of the matrix $\boldsymbol{Z}^T$ (the last $N - L_{1/2} - 1$ rows of the matrix $\boldsymbol{Z}^T$), the criterion (18) is used in a manner similar to the *ACELP* fixed codebook search.

A detailed description of how to compute the matrix $\boldsymbol{Z}^T$ and the criterion (18) will now be described.

In the first stage, the first $L_{1/2} + 1$ rows of the matrix $\boldsymbol{Z}^T$ that correspond to the positions $k'$ within the range $[0, L_{1/2}]$ are computed. For these positions a different truncated glottal shape is used for each position $k'$ within this range. In a first operation, a convolution between the glottal-shape response for position $k' = 0$ and the impulse response $h(n)$ is computed using the Equation:

$$z_0(n) = \sum_{i=0}^{n} g(n-i)h(i) , \qquad (19)$$

where advantage is taken of the fact that the shaping filter G(z) has only $L_{1/2} + 1$ non-zero coefficients, i.e. $g(0)$, $g(1)$, ..., $g(L_{1/2})$ are non-zero coefficients.

In a second operation, the convolution $z_1(n)$ between the glottal-shape codebook response for position $k' = 1$ and the impulse response $H(z)$ is computed reusing values of $z_0(n)$ as follows (the matrix $\boldsymbol{Z}^T = \boldsymbol{G}^T \cdot \boldsymbol{H}^T$ is a matrix with some zero negative-sloping diagonals, but this matrix $\boldsymbol{Z}^T$ is no longer a Toeplitz and triangular matrix as shown in Figure 10):

$$z_1(0) = g(-1)h(0)$$

$$(20)$$

$$z_1(n) = z_0(n-1) + g(-1)h(n) \text{ for } n = 1, ..., N - 1.$$

For the following rows, the recursion in Equation (21) is reused:

$$z_{k'}(0) = g(-k')h(0)$$

$$(21)$$

$$z_{k'}(n) = z_{k'-1}(n-1) + g(-k')h(n) \text{ for } n = 1, \ldots, N-1$$

The recursion (21) is repeated for all $k' \leq L_{1/2}$. For $k' = L_{1/2}$ the shaping filter $G(z)$ has already $L$ non-zero coefficients and the $(L_{1/2}+1)^{th}$ row of the matrix $\mathbf{Z}^T$ is thus obtained by

$$z_{L_{1/2}}(0) = g(-L_{1/2})h(0)$$

$$(22)$$

$$z_{L_{1/2}}(n) = z_{L_{1/2}-1}(n-1) + g(-L_{1/2})h(n) \text{ for } n = 1, \ldots, N-1.$$

At this point, the first $L_{1/2} + 1$ rows of the matrix $\mathbf{Z}^T$ have been computed. These rows comprise no zero coefficients (Figure 10). Then the criterion (18) can be computed for $k'$ within the range $[0, L_{1/2}]$ using the Equation:

$$\Im_{k'} = \frac{\left( \sum_{i=0}^{N-1} z_{k'}(i) \cdot x_1(i) \right)^2}{\sum_{i=0}^{N-1} z_{k'}(i) \cdot z_{k'}(i)} .$$

$$(23)$$

In the second stage the rest of the matrix $Z^T$ is computed and the criterion (18) is evaluated for positions $k'$ within the range $[L_{1/2} + 1, N - 1]$. Advantage is taken of the fact that rows $L_{1/2} + 1, \ldots, N - 1$ of the matrix $\mathbf{Z}^T$ are built using coefficients of the convolution $z_{L_{1/2}}(n)$ that have already been computed as described by the equation (22). The difference is that only a part of the coefficients is needed to compute these rows. That is, each row corresponds to the previous row shifted to the right by 1 and adding a zero at the beginning:

$$z_{k'}(0) = 0$$

$$(24)$$

$$z_{k'}(n) = z_{k'-1}(n-1) \text{ for } n = 1, \ldots, N-1.$$

This is repeated for k' within the range $[L_{1/2} + 1, N - 1]$.
In this second stage, the criterion (18) can be computed in a manner similar to that described in the above section *Fixed codebook search* to further reduce the computational complexity. The criterion (18) is first evaluated for the last position $k' = N - 1$ (this is the last row of the matrix $\mathbf{Z}^T$). For $k' = N - 1$ the numerator and the denominator of the criterion (18) is provided by the following Equation

$$d_g(N-1) = \sum_{i=0}^{L_{1/2}} x(N-1-L_{1/2}+i)z_{L_{1/2}}(i),$$

$$(25)$$

and

$$\Phi_g(N-1, N-1) = \sum_{i=0}^{L_{1/2}} z_{L_{1/2}}(i)z_{L_{1/2}}(i).$$

$$(26)$$

Since some of the coefficients of the matrix $Z^T$ are zeros (Figure 10), only $L_{1/2} + 1$ multiplications (instead of the $N$ multiplications as used in Equation (23)) are used to compute the numerator and the denominator of the criterion (18).
When using the example of Figure 10 ($L_{1/2} = 1$) the criterion (18), computed using equations (25) and (26), can be simplified as follows:

$$\Im_{N-1} = \frac{\left(d_g(N-1)\right)^2}{\Phi_g(N-1,N-1)} = \frac{\left(x(N-2)z_{L_{1/2}}(0) + x(N-1)z_{L_{1/2}}(1)\right)^2}{z_{L_{1/2}}(0)z_{L_{1/2}}(0) + z_{L_{1/2}}(1)z_{L_{1/2}}(1)} . \qquad (27)$$

In the next steps some of previously computed values can be again reused for the denominator computation. For the position $N$ - 2 the denominator of the criterion (18) is computed using

$$\Phi_g(N-2,N-2) = \Phi_g(N-1,N-1) + z_{L_{1/2}}(L_{1/2}+1)z_{L_{1/2}}(L_{1/2}+1) . \qquad (28)$$

The numerator is computed using Equation (25) with the summation index changed:

$$d_g(N-2) = \sum_{i=0}^{L_{1/2}+1} x(N-2-L_{1/2}+i)z_{L_{1/2}}(i) . \qquad (29)$$

In a similar manner, the numerator and the denominator of criterion (18) are calculated for all positions $k' > L_{1/2}$.

The above described procedure allows to find the maximum of the criterion (18) for codevectors that represent the first shape from the glottal impulses. The search will continue using the previously described procedure for all other glottal impulse shapes. The maximum of criterion (18) search continues as glottal-shape codebook search to find one maximum value for criterion (18) that corresponds to the one glottal-shape and one position $k'$ constituting the result of the search.

It is also possible to use sub-sample resolution when searching the glottal pulse center position $k'$; this will, however, result in increased complexity. More specifically, this will require up-sampling the glottal impulse shapes to increase the resolution and extracting different shifted versions at different resolutions. This is equivalent to using a larger glottal shape codebook.

Ideally the criterion (18) is computed for all possible glottal impulse positions $k'$. In the non-restrictive illustrative embodiment, the search is performed only in a restrained range around the expected position of the position $k'$ to further reduce the computational complexity. This expected position is in the range $[k_{min}, k_{max}]$, $0 \le k_{min} < k_{max} < N$, and can be determined for the first glottal shape from the *LP* residual signal maximum found as described in the above Section *Subframe Selection for Glottal-Shape Codebook Search.* A glottal-shape codebook search is then performed and position $k'$ is found for the first glottal shape. The new range $[k_{min}, k_{max}]$ is set for the second glottal shape search as follows:

$$k_{min} = k' - \Delta,$$

$$k_{max} = k' + \Delta. \qquad (30)$$

Typically $\Delta = 4$. Similarly, Equation (30) is used to define the search range for the third shape around the selected position of the second shape and so on.

In the following example, it is supposed that the initial search range is $[N$ - 15, $N$ - 7], $L = 17$ and $N = 64$. The search starts with computing the value $z_{L_{1/2}}(n)$. Then the criterion (18) for the position $k' = N$ - 7 is evaluated using

$$\Im_{N-7} = \frac{\left(d_g(N-7)\right)^2}{\Phi_g(N-7,N-7)} = \frac{\left(\sum_{i=0}^{L_{1/2}+6} x(N-7-L_{1/2}+i)z_{L_{1/2}}(i)\right)^2}{\sum_{i=0}^{L_{1/2}+7} z_{L_{1/2}}(i)z_{L_{1/2}}(i)} \qquad (31)$$

To compute the criterion for position $k' = N$ - 8, the denominator is recursively computed as:

$$\Phi_g(N-8, N-8) = \Phi_g(N-7, N-7) + z_{L_{1/2}}(L_{1/2}+8) z_{L_{1/2}}(L_{1/2}+8) . \qquad (32)$$

In the same manner, the denominator is computed for all remaining positions until $k' = N$ - 15. The numerator of criterion (18) is computed for every position within the range [$N$ - 15, $N$ - 7] separately in a manner similar to Equation (29) using:

$$d_g(k') = \sum_{i=0}^{N-k'+L_{1/2}-1} x(k'-L_{1/2}+i) z_{L_{1/2}}(i) . \qquad (33)$$

The last parameter to be determined in the glottal-shape codebook search is the gain $g_p$ that can be computed as in Equation (4) with the difference that it is not bounded as in the adaptive codebook search. The reason is that the filtered glottal-shape codevector is constructed using normalized quantized glottal shapes with energy very different from the energy of the actual excitation signal impulses.

The indices related to the glottal impulse position and the glottal shape are transmitted to the decoder. The filtered glottal-shape codevector reconstruction in the decoder is shown in Figure 11. It should be noted that the pitch period length no longer needs to be transmitted in a glottal-shape codebook search subframe with the exception when the subframe contains more than one glottal impulse as will be discussed hereinafter.

**More Glottal Impulses in One Subframe**

There are situations where the pitch period of the speech signal is shorter than the subframe length and in this case the subframe can contain more than one glottal impulse (especially in the configuration TRANSITION_1_1). In this case it is necessary to model all the glottal impulses. Given the pitch period length limitations and the subframe length, a subframe cannot contain more than two glottal impulses in this non-restrictive illustrative embodiment.

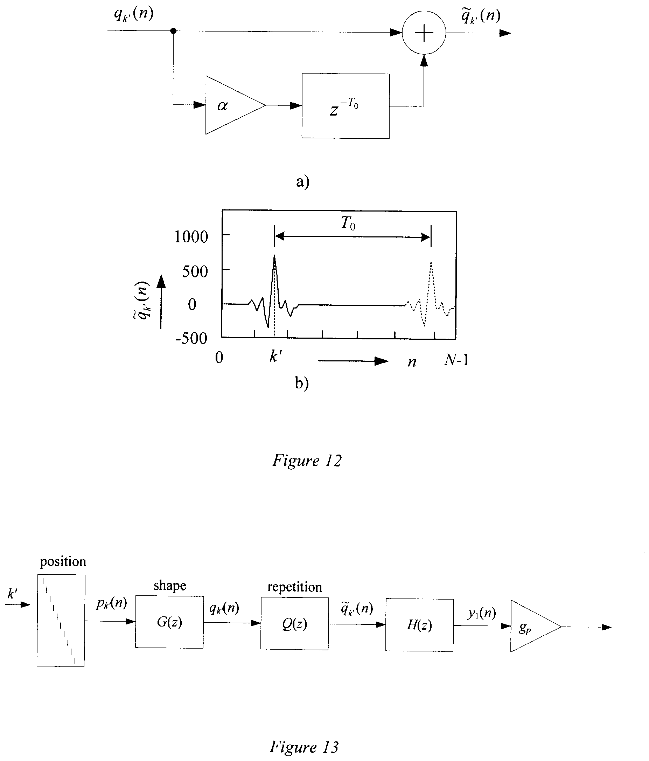

These situations can be solved by two different approaches. The first and simpler one solves these situations by means of a similar procedure as the periodicity enhancement (pitch sharpening) used in *AMR-WB* (Adaptive Multi-Rate Wideband) as described in Reference [1], where the impulse is basically repeated with the pitch period using a linear filter. As illustrated in Figure 12a, the glottal-shape codevector $q_{k'}(n)$ is thus processed through an adaptive, repetition filter of the form:

$$Q(z) = \frac{1}{1 - \alpha \cdot z^{-T_0}} . \qquad (34)$$

The pitch period $T_0$ can be determined for example by the standard closed-loop pitch search approach. The parameter $\alpha$ impacts the energy of the second impulse and, in the non-restrictive illustrative embodiment, has been set to $\alpha$ = 0.85. This technique adds the missing glottal impulse at the correct position into the glottal-shape codevector. This is illustrated as the dotted impulse in Figure 12 b. This situation appears when the sum of the glottal impulse central position $k'$ and the pitch period $T_0$ is less than the subframe length $N$, i.e. ($k'+T_0$) < $N$. But also in situations where the sum of the impulse position $k'$ and pitch period exceeds the subframe length, the pitch period value is also used to build the fixed codevector when pitch sharpening in the algebraic codebook is used.

The repetition filter $Q(z)$ is inserted into the *TM* part of the codec between the filters $G(z)$ and $H(z)$, as shown in the block diagram of Figure 13 for the encoder. The same change is made in the decoder. Similarly to pitch sharpening, the impulse response of the repetition filter $Q(z)$ can be added to the impulse response of $G(z)$ and $H(z)$ prior to the codebook search so that both impulses are taken into account during the search while keeping the complexity of the search at a low level.

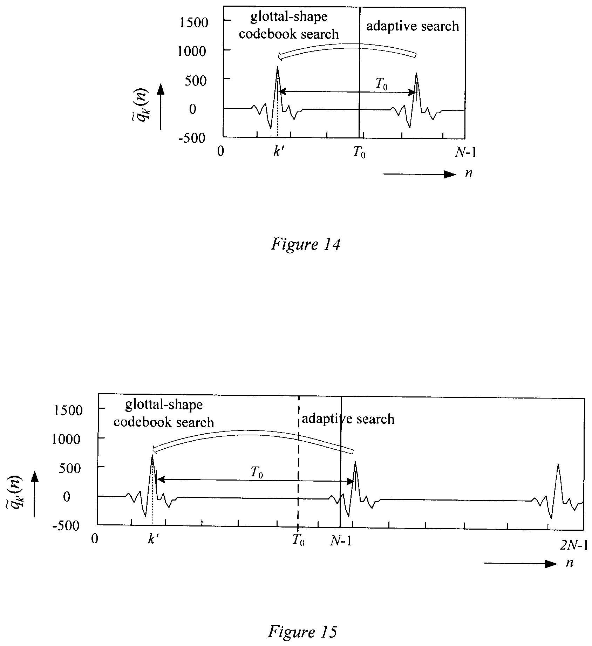

Another approach to build the glottal-shape codevector with two glottal impulses in one subframe is to use an adaptive codebook search in a part of the subframe. The first $T_0$ samples of the glottal-shape codevector $q_{k'}(n)$ are build using the glottal-shape codebook search and then the other samples in the subframe are build using the adaptive search as shown in Figure 14. This approach is more complex, but more accurate.

To further increase the encoding efficiency, the above described procedure can be used even if the second glottal impulse appears in one of the first $L_{1/2}$ positions of the next subframe (Figure 15). In this situation, i.e. when $k'$ and $T_0$ hold $N \le (k'+T_0) < (N + L_{1/2})$, only a few samples (less than $L_{1/2}+1$) of the glottal shape are used at the end of the current subframe. This approach is used in the non-restrictive illustrative embodiment. This approach has a limitation because the pitch period value transmitted in these situations is limited to $T_0 < N$ (this is a question of effective encoding), although ideally its value should be limited to $T_0 \leq N + L_{1/2}$. Therefore if the second glottal impulse appears at the beginning of the next subframe, the repetition procedure cannot be used for some of the first $L_{1/2}$ glottal impulse positions $k'$ of the first glottal impulse.

## Implementation of the TM Coding Technique in EV- VBR Codec

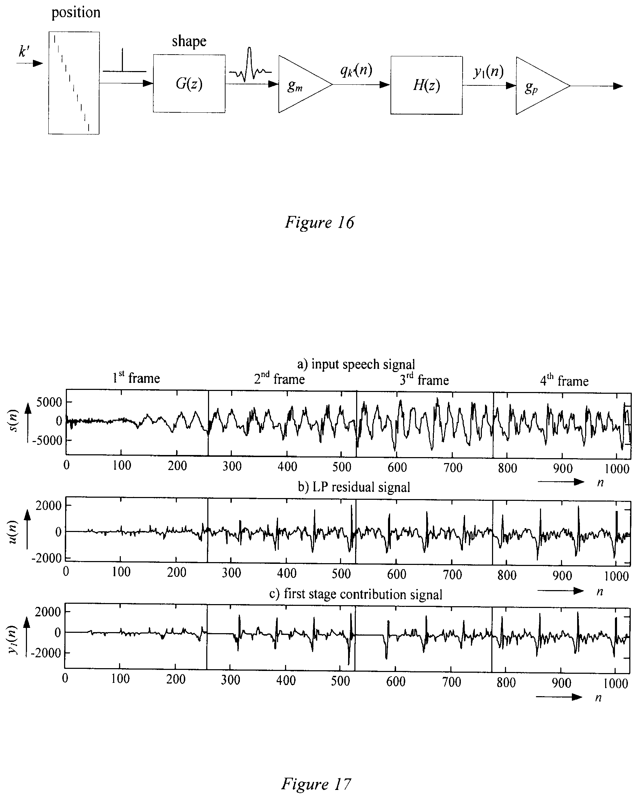

The *TM* coding technique according to the non-restrictive illustrative embodiment has been implemented in the *EV-VBR* codec. *EV-VBR* uses the internal sampling frequency of 12.8 kHz and the frame length of 20 ms. Each frame is divided into four subframes of $N = 64$ samples. The *EV-VBR* classification procedure has been adapted to select frames to be encoded using the *TM* coding technique. In this implementation, the gain of the glottal-shape codebook contribution is quantized in two steps as depicted in Figure 16, where $G(z)$ is the shaping filter, $k'$ is the position of the centre of the glottal shape and $g_m$ is a *TM* gain, i.e. a roughly quantized energy of the glottal-shape codevector. The *TM* gain $g_m$ is found in the same way as the pitch gain using Equation (4) only with the difference that it is not bounded. It is then quantized by means of a 3-bit scalar quantizer and one bit for sign is used. The glottal-shape codevector is then scaled using this gain $g_m$. After both contributions to the filtered excitation signal (first and second stage contribution signals, i.e. the filtered glottal-shape codebook contribution and the filtered algebraic codebook contribution) are found, the gain of the first stage excitation signal is further adjusted jointly with the second stage excitation signal gain quantization, using the standard *EV-VBR* gain vector quantization (*VQ*). In this manner, the gain quantization codebooks of *EV-VBR* designed for generic or voiced coding modes could be used also in *TM* coding. Of course, it is within the scope of the present invention to perform the gain quantization using other, different methods.

The search of the glottal impulse central position $k'$ should be theoretically made for all positions in a subframe, i.e. within the range [0, *N-1*]. Nevertheless as already mentioned, this search is computationally intensive given the number of glottal-shapes to be tried and, in practice, it can be done only in the interval of several samples around the position of the maximum absolute value in the *LP* residual signal. The searching interval can be set to $\pm$ 4 samples around the position of the first glottal impulse maximum in the *LP* residual signal in the current frame. In this manner, processing complexity is approximately the same as for the *EV-VBR* generic encoding using the adaptive and fixed codebook search.

The transmitted parameters related to the *TM* coding technique are listed in Table 4 with the corresponding number of bits. The parameter $T_0$, which is used to determine the filter $Q(z)$ or perform adaptive search for the second glottal impulse in case of two impulses in one subframe, is transmitted when $T_0 \leq N$. The remaining parameters used for a *TM* frame, but common with the generic *ACELP* processing, are not shown here (frame identification bits, *LP* parameters, pitch delay for adaptive excitation, fixed codebook excitation, 1 st and 2nd stage codebook gains). When *TM* parameters are added to the bit stream, the number of bits originally allocated to other *EV-VBR* parameters is reduced in order to maintain a constant bit rate. These bits can be reduced for example from the fixed codebook excitation bits as well as from the gain quantization.

*Table 4 - Parameters in the bit-stream transmitted for the subframe encoded using the TM.*

| Label | Signification | Number of bits |
|---|---|---|
| ID | configuration identification | 1-4 |
| shape | glottal impulse shape | 3 |
| $k'$ | position of the glottal impulse centre | 6 |
| $g_m$ | *TM* gain | 3 |
| sign($g_m$) | sign of the *TM* gain | 1 |
| $T_0$ | closed-loop pitch period (if applicable) | 5 |

The bit allocation tables used in *EV-VBR* are shown herein below. Let us recall that, when the glottal-shape codebook search is not applied to the first subframe, only the fixed codebook and its gain are transmitted to encode the excitation signal in subframes preceding the glottal-shape codebook subframe. The same situation happens for configurations TRANSITION_1_3 and TRANSITION_1_4. In those cases it is possible to maintain the same or even large size of fixed codebook for all subframes as in the original generic *ACELP* coding.

**TM Technique Performance in EV-VBR Codec**

In this section some examples of the performance of the *TM* coding technique in the *EV-VBR* codec implementation are presented. In Figure 17 an example of the impact of the *TM* coding technique is shown for clean-channel condition. Figure 17a shows the input speech signal, Figure 17b shows the *LP* residual signal and Figure 17c shows the first stage excitation signal where the *TM* coding technique is used in the first three (3) frames. As expected, the difference between the residual signal and the first stage excitation signal is more pronounced in the beginning of each frame. Towards the end of the frame, the first stage excitation signal corresponds more closely to the residual signal because the standard adaptive codebook search is used.

Tables 5 and 6 summarize some examples of the performance of the *TM* coding technique measured using SNR values.

In the first example (Table 5) a *TM* technique was implemented in codec with a core (inner) sampling frequency $F_s$ = 8 kHz (i.e. a subframe length $N$ = 40 samples), glottal-shape codebook with sixteen (16) shapes of length seventeen (17) samples was used, and narrowband input signals were tested. From Table 5 it can be seen that coding voiced onset frames using the *TM* coding technique enhances the quality of output speech signal (see segmental and weighted segmental *SNR* values for 1 and 2 *TM* frames). Further *SNR* increase can be observed if the voiced onset frame and one following frame are encoded using the *TM* coding technique. However, if more than one frame following the voiced onset frame is also coded using the *TM* coding technique, the *SNR* values decreases. The weighted *SNR* is the *SNR* weighted by the frame energy normalized by the frame length, in dB.

*Table 5 - SNR measurements comparison of the impact of the TM coding technique on NB signals.*

| Number of TM frames | Weighted segmental | Segmental SNR [dB] | SNR [dB] |
|---|---|---|---|
| 0 (no *TM* coding) | 10.85 | 10.20 | 12.05 |
| 1 (*TM in* onset frame) | 10.88 | 10.48 | 11.03 |
| 2 (*TM* in onset frame + 1 frame) | 10.90 | 10.49 | 11.04 |
| 3 (*TM* in onset frame + 2 frames) | 10.80 | 10.41 | 10.92 |

Table 6 summarizes an example of the performance of the *EV-VBR* codec with core (inner) sampling frequency $F_s$ = 12.8 kHz, *WB* input speech signal and glottal-shape codebook with eight (8) shapes of length seventeen (17) samples. Mostly because of the longer subframe length *N*, the *SNRs* values show some degradation for clean channel when the *TM* coding technique is used, even if it is used in one frame only. This is caused mostly because of the limited length of the glottal-shape impulses. In comparison to the *NB* example, more zero values are presented in the first stage excitation signal in the subframe. The benefit of using the *TM* coding technique in this example is in the *FE* (Frame Erasure) protection.

*Table 6 - SNR measurements comparison of the impact of the TM coding technique on WB signals.*

| Number of TM-coded frames | weighted segmental SNR [dB] | segmental SNR [dB] | SNR [dB] |
|---|---|---|---|
| 0 (no *TM* coding) | 7.52 | 7.21 | 8.61 |
| 1 (*TM* in onset frame) | 7.51 | 7.21 | 8.59 |
| 1 (*TM* in frame after onset frame) | 7.49 | 7.19 | 8.55 |
| 2 (*TM* in onset frame + 1 frame) | 7.48 | 7.17 | 8.55 |
| 2 (*TM* in 2 frames after onset frame) | 7.38 | 7.10 | 8.35 |
| 3 (*TM* in onset frame + 2 frames) | 7.36 | 7.08 | 8.31 |

It should be also noted that even when the *TM* coding technique is used in a frame after the erased frame, there is still some little difference between the synthesised speech in clean channel and noisy channel. This is because the encoder and the decoder internal states do not depend only on the past excitation signal, but also on many other parameters (e.g. filters memories, *ISF* (Immitance Spectral Frequencies) quantizer memories, ...). It is of course possible to test the variant when a memoryless *LP* parameters quantization optimized *TM* coding is used and all the internal states are reset for *TM* frames. This way all memories that the *EV-VBR* codec uses in the standard generic encoding mode were reset to ensure that decoder internal states after a frame erasure are the same as its states in error-free conditions. Nevertheless the speech quality in error-free conditions drops significantly for this variant. Consequently, there is a compromise to be made between the high performance in error-free conditions and the robustness to erased frames or packets when no additional memory resets are made.

Table 7 summarizes the computing complexity issue of the *TM* coding technique. In the worst case the *TM* coding technique increases the complexity in the encoder by 1.8 WMOPS (Weighted Millions of Operations Per Second). The complexity in the decoder remains approximately the same.

*Table 7 - Complexity of the TM coding technique (worst case and average values).*

| Configuration | Encoder WMOPS | | Decoder WMOPS | |
|---|---|---|---|---|
| | *Max* | *Average* | *Max* | *Average* |
| original (no *TM* coding) | 36.531 | 34.699 | 7.053 | 5.278 |
| *TM* coding technique used | 38.346 | 34.743 | 7.055 | 5.281 |

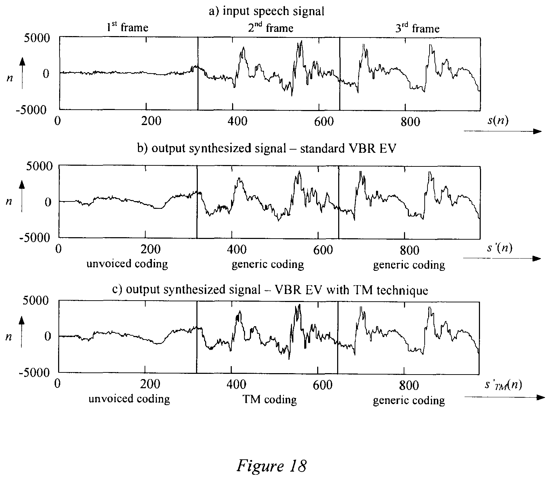

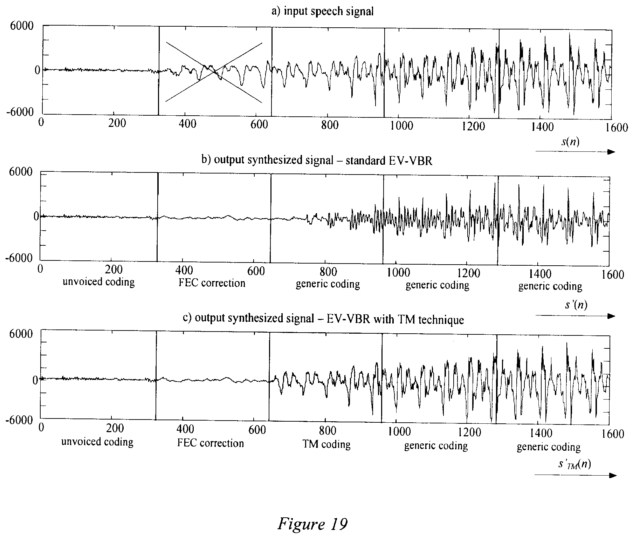

The following figures illustrate the performance of the *TM* coding technique for voiced onset frame modeling (Figures 18a-18c) and for frame error propagation mitigation (Figures 19a-19c). The *TM* coding technique is used only in one frame at a time in this example. A segment of the input speech signal (Figures 18a and 19a), the corresponding output synthesized speech signal processed by the *EV-VBR* decoder without the *TM* coding technique as illustrated in Figures 18b and 19b, and the output synthesized speech signal processed using the standard *EV-VBR* decoder with *TM* coding technique (Figures 18c and 19c) are shown. The benefits of the *TM* coding technique can be observed both in the modeling of the voiced onset frame (2nd frame of Figure 18) and in the limitation of frame error propagation (4th and 5th frames of Figure 19).

The frame erasure concealment technique used in the *EV-VBR* decoder is based on the use of an extra decoder delay of 20 ms length (corresponding to one frame length). It means that if a frame is missing, it is concealed with the knowledge of the future frame parameters. Let us suppose three (3) consecutive frames that are denoted as $m$-1, $m$ and $m$+1 and further suppose a situation when the frame $m$ is missing. Then an interpolation of the last correctly received frame $m$-1 and the following correctly received frame $m$+1 can be computed in view of determining the codec parameters, including in particular but not exclusively the *LP* filter coefficients (represented by *ISF* - Immitance Spectral Frequencies), closed-loop pitch period $T_0$, pitch and fixed codebook gains. The interpolation helps to estimate the lost frame parameters more accurately for stable voiced segments. However, it often fails for transition segments when the codec parameters vary rapidly. To cope with this problem, the absolute value of the pitch period can be transmitted in every *TM* frame even in the case that it is not used for the first stage excitation construction in the current frame $m$+1. This is valid especially for configurations TRANSITION_1_4 and TRANSITION_4.

Other parameters transmitted in a *TM* frame are the *ISF*s of the preceding frame. In *CELP*-type encoders, the *ISF* parameters are generally interpolated between the previous frames *ISF*s and the current frame *ISF*s for each subframe. This ensures a smooth evolution of the *LP* synthesis filter from one subframe to another. In case of a frame erasure, the *ISF*s of the frame preceding the frame erasure are usually used for the interpolation in the frame following the erasure, instead of the erased frame *ISF*s. However during transition segments, the *ISF*s vary rapidly and the last-good frame *ISF*s might be very different from the *ISF*s of the missing, erased frame. Replacing the missing frame *ISF*s by the *ISF*s of the previous frame may thus cause important artefacts. If the past frame *ISF*s can be transmitted, they can be used for *ISF* interpolation in the *TM* frame in case the previous frame is erased. Later, different estimations of *LP* coefficients used for the *ISF* interpolation when the frame preceding a *TM* frame is missing will be described.

The final implementation of the *TM* coding technique to the *EV-VBR* codec supposes that only one frame after onset/transition frame is coded using *TM*. In this manner, about 6.3% of active speech frames are selected for *TM* encoding and decoding.

Another category of tests focused on the increase in encoding efficiency. The classification was made in the closed-loop search when two variants - with and without the *TM* coding technique - were computed side by side in the encoder and a variant with a higher *SNR* was chosen as an output signal.

Results for the *EV-VBR* codec with bit rate of 8 kbps are summarized in Table 8. In the *WB* case, 28% of active speech frames was classified for encoding using the *TM* coding technique and an increase of 0.203 dB in segmental *SNR* was achieved. In the *NB* case, 25% of active speech frames was classified for encoding using the *TM* coding technique and an increase of even 0.300 dB in segmental *SNR* was achieved. Unfortunately this objective test increase was not confirmed by subjective listening tests that reported no preference between codec with and without the *TM* coding technique. Although there is no speech quality degradation and the total number of *TM* frames is four (4) times higher compared with an open-loop classification that results in much higher *FE* protection, this classification and similar result classifications are better not used in an *EV-VBR* codec implementation due to the increased complexity.

*Table 8 - Segmental SNR and SNR measure comparison between codec with and without TM coding technique implemented when close-loop classification is used.*

| Number of TM-coded frames | segmental SNR [dB] | SNR [dB] |
|---|---|---|
| Codec without TM, WB signal | 7.34 | 8.89 |
| Codec with TM, WB signal | 7.54 | 9.04 |
| Codec without TM, NB signal | 7.58 | 10.62 |
| Codec with TM, NB signal | 7.88 | 10.97 |

**Bit-allocation tables for *TM* coding technique in *EV-VBR* Codec**

The *TM* coding technique was implemented in an *EV-VBR* codec candidate for *ITU-T* standardization. The following Table 9 shows bit allocation tables of the original generic mode and all *TM* coding mode configurations that were introduced herein above. These configurations are used in the *EV-VBR* codec.

*Table 9 – Bit allocation tables for generic coding mode and for all TM configurations as used in the EV-VBR codec (ID stands for configuration identification, ISFs for Immitance Spectral Frequencies and FCB for Fixed CodeBook, subfr. is subframe).*

| a) GENERIC | | b) TRANSITION_1_1 | | c) TRANSITION_1_2 | |
|---|---|---|---|---|---|
| # bits | parameter | # bits | parameter | # bits | parameter |
| 2 | coder type | 2 | coder type | 2 | coder type |
| 1 | NB/WB | 1 | NB/WB | 1 | NB/WB |
| 36 | ISFs | 36 | ISFs | 36 | ISFs |

| Bits | Field |
|---|---|
| 3 | energy estimate |
| 8 | 1st subfr. pitch |
| 5 | 1st subfr. gains |
| 5 | 2nd subfr. pitch |
| 5 | 2nd subfr. gains |
| 8 | 3rd subfr. pitch |
| 5 | 3rd subfr. gains |
| 5 | 4th subfr. pitch |
| 5 | 4th subfr. gains |
| 12 | 1st subfr. FCB |
| 20 | 2nd subfr. FCB |
| 20 | 3rd subfr. FCB |
| 20 | 4th subfr. FCB |

160 bits total

| Bits | Field |
|---|---|
| 3 | energy estimate |
| 1 | TM subfr. ID |
| 5 | 1st subfr. pitch |
| 3 | TM shape |
| 6 | TM position |
| 1 | TM gain sign |
| 3 | TM gain value |
| 5 | 1st subfr. gains |
| 5 | 2nd subfr. pitch |
| 5 | 2nd subfr. gains |
| 5 | 3rd subfr. pitch |
| 5 | 3rd subfr. gains |
| 5 | 4th subfr. pitch |
| 5 | 4th subfr. gains |
| 20 | 1st subfr. FCB |
| 20 | 2nd subfr. FCB |
| 12 | 3rd subfr. FCB |
| 12 | 4th subfr. FCB |

160 bits total

| Bits | Field |
|---|---|
| 3 | energy estimate |
| 1 | TM subfr. ID |
| 1 | TM subfr. ID |
| 3 | TM shape |
| 6 | TM position |
| 1 | TM gain sign |
| 3 | TM gain value |
| 5 | 1st subfr. gains |
| 1 | TM subfr. ID2 |
| 1 | TM subfr. ID2 |
| 7 | 2nd subfr. pitch |
| 5 | 2nd subfr. gains |
| 5 | 3rd subfr. pitch |
| 5 | 3rd subfr. gains |
| 5 | 4th subfr. pitch |
| 5 | 4th subfr. gains |
| 20 | 1st subfr. FCB |
| 20 | 2nd subfr. FCB |
| 12 | 3rd subfr. FCB |
| 12 | 4th subfr. FCB |

160 bits total

| d) TRANSITION_1_3 | | e) TRANSITION_1_4 | | f) TRANSITION_2 | |
|---|---|---|---|---|---|
| # bits | parameter | # bits | parameter | # bits | parameter |
| 2 | coder type | 2 | coder type | 2 | coder type |
| 1 | NB/WB | 1 | NB/WB | 1 | NB/WB |
| 36 | ISFs | 36 | ISFs | 36 | ISFs |
| 3 | energy estimate | 3 | energy estimate | 3 | energy estimate |
| 1 | TM subfr. ID | 1 | TM subfr. ID | 1 | TM subfr. ID |
| 1 | TM subfr. ID | 1 | TM subfr. ID | 1 | TM subfr. ID |
| 3 | TM shape | 3 | TM shape | 1 | TM subfr. ID |
| 6 | TM position | 6 | TM position | 2 | $1^{st}$ subfr. gain |
| 1 | TM gain sign | 1 | TM gain sign | 3 | TM shape |
| 3 | TM gain value | 3 | TM gain value | 6 | TM position |
| 5 | $1^{st}$ subfr. gains | 5 | $1^{st}$ subfr. gains | 1 | TM gain sign |
| 1 | TM subfr. ID2 | 1 | TM subfr. ID2 | 3 | TM gain value |
| 1 | TM subfr. ID2 | 3 | $2^{nd}$ subfr. gain | 5 | $2^{nd}$ subfr. gains |
| 3 | $2^{nd}$ subfr. gain | 2 | $3^{rd}$ subfr. gain | 8 | $3^{rd}$ subfr. pitch |

| | |
|---|---|
| 7 | 3$^{rd}$ subfr. pitch |
| 5 | 3$^{rd}$ subfr. gains |
| 4 | 4$^{th}$ subfr. pitch |
| 5 | 4$^{th}$ subfr. gains |
| 20 | 1$^{st}$ subfr. FCB |
| 12 | 2$^{nd}$ subfr. FCB |
| 20 | 3$^{rd}$ subfr. FCB |
| 20 | 4$^{th}$ subfr. FCB |

160 bits total

| | |
|---|---|
| 7 | 4$^{th}$ subfr. pitch |
| 5 | 4$^{th}$ subfr. gains |
| 20 | 1$^{st}$ subfr. FCB |
| 20 | 2$^{nd}$ subfr. FCB |
| 20 | 3$^{rd}$ subfr. FCB |
| 20 | 4$^{th}$ subfr. FCB |

160 bits total

| | |
|---|---|
| 5 | 3$^{rd}$ subfr. gains |
| 5 | 4$^{th}$ subfr. pitch |
| 5 | 4$^{th}$ subfr. gains |
| 20 | 1$^{st}$ subfr. FCB |
| 20 | 2$^{nd}$ subfr. FCB |
| 12 | 3$^{rd}$ subfr. FCB |
| 20 | 4$^{th}$ subfr. FCB |

160 bits total

| g) TRANSITION_3 | | h) TRANSITION_4 | |
|---|---|---|---|
| # bits | parameter | # bits | parameter |
| 2 | coder type | 2 | coder type |
| 1 | NB/WB | 1 | NB/WB |
| 36 | ISFs | 36 | ISFs |
| 3 | energy estimate | 3 | energy estimate |
| 1 | TM subfr. ID | 1 | TM subfr. ID |

| | | | | |
|---|---|---|---|---|
| 1 | *TM* subfr. *ID* | | 1 | *TM* subfr. *ID* |
| 1 | *TM* subfr. *ID* | | 1 | *TM* subfr. *ID* |
| 1 | *TM* subfr. *ID* | | 1 | *TM* subfr. *ID* |
| 3 | $1^{st}$ subfr. gain | | 3 | $1^{st}$ subfr. gain |
| 3 | $2^{nd}$ subfr. gain | | 2 | $2^{nd}$ subfr. gain |
| 5 | $3^{rd}$ subfr. pitch | | 3 | $3^{rd}$ subfr. gain |
| 3 | *TM* shape | | 8 | $4^{th}$ subfr. pitch |
| 6 | *TM* position | | 3 | *TM* shape |
| 1 | *TM* gain sign | | 6 | *TM* position |
| 3 | *TM* gain value | | 1 | *TM* gain sign |
| 5 | $3^{rd}$ subfr. gains | | 3 | *TM* gain value |
| 8 | $4^{th}$ subfr. pitch | | 5 | $4^{th}$ subfr. gains |
| 5 | $4^{th}$ subfr. gains | | 20 | $1^{st}$ subfr. *FCB* |
| 12 | $1^{st}$ subfr. *FCB* | | 20 | $2^{nd}$ subfr. *FCB* |
| 20 | $2^{nd}$ subfr. *FCB* | | 20 | $3^{rd}$ subfr. *FCB* |
| 20 | $3^{rd}$ subfr. *FCB* | | 20 | $4^{th}$ subfr. *FCB* |
| 20 | $4^{th}$ subfr. *FCB* | | | |

160 bits total

160 bits total

There is one exception to the configuration TRANSITION_2 in Table 9. This bit-allocation table can be used only in the situation when it is decided to use the *TM* coding technique in the frames following the voiced onset frame only (the voiced onset frame is encoded using the generic coding mode and only one frame following the voiced onset frame is encoded using the *TM* coding technique). In this situation, the pitch period $T_0$ is $T_0 \geq N$ in the second subframe and there is no need to transmit this parameter in the 2nd subframe. But if the *TM* coding technique is used also in the voiced onset frame, the following situation may occur. The pitch period is shorter than *N*, but the voiced onset can start

only in the 2nd subframe (e.g. the first subframe still containing unvoiced signal). In this case the pitch period $T_0$ must be transmitted. In this situation a different bit-allocation table is used, parameter $T_0$ is transmitted in the 2nd subframe using five (5) bits and in one subframe a shorter fixed codebook is used (see Table 10). The same situation appears also for the configuration TRANSITION_3. However, the pitch period is transmitted here anyway in the present, non-limitative implementation (whether the onset frame is coded using the *TM* coding technique or not) because there is no good use of the saved bits for another parameter encoding.

Other bit allocations can be used in different transition mode configurations. For instance, more bits can be allocated to the fixed codebooks in the subframes containing glottal pulses. For example, in TRANSITION_3 mode, a *FCB* with twelve (12) bits can be used in the second subframe and twenty-eight (28) bits in the third subframe. Of course, other than 12- and 20-bit *FCB*s can be used in different coder implementations.

*Table 10 - Bit allocation table for configuration TRANSITION_2 if TM is used also in the onset frame.*

| TRANSmON_2a | |
|---|---|
| **# bits** | **parameter** |
| 2 | codertype |
| 1 | *NBIWB* |
| 36 | *ISFs* |
| 3 | Energy estimate |
| 1 | *TM* subfr. *ID* |
| 1 | *TM* subfr. *ID* |
| 1 | *TM* subfr. *ID* |
| 3 | 1st subfr. Gain |
| 5 | 2nd subfr pitch |
| 3 | *TM* shape |
| 6 | *TM* position |
| 1 | *TM* gain sign |
| 3 | *TM* gain value |
| 5 | 2nd subfr. Gains |
| 8 | 3rd subfr. Pitch |
| 5 | 3rd subfr. gains |
| 5 | 4th subfr. Pitch |
| 5 | 4th subfr. Gains |
| 20 | 1st subfr. *FCB* |
| 20 | 2nd subfr. *FCB* |
| 12 | 3rd subfr. *FCB* |
| 12 | 4th subfr. FCB |
| | |
| 158 bits total | |

If there is available bandwidth, further enhancement can be achieved by transmitting more information for better frame erasure (*FE*) protection. The *VMR-WB* codec is an example of a codec that uses some portion of *FE* protection bits. For example fourteen (14) protection bits per frame are used in the Generic Full-Rate encoding type in *VMR-WB* in Rate-Set II. These bits represent frame classification (2 bits), synthesized speech energy (6 bits) and glottal pulse position (6 bits). The glottal pulse is inserted artificially in the decoder when a voiced onset frame is lost. These *FER* protection bits are not much important for excitation construction in a *TM* frame because the *TM* coding technique does not make use of the past excitation signal; the TM coding technique constructs the excitation signal using parameters transmitted in the current (*TM*) frame. These bits can be however employed for the transmission of other parameters. In an example of implementation, these bits can be used to transmit in the current *TM* frame the *ISF* parameters of the previous frame; however twelve (12) bits instead of thirty-six (36) bits are available). These *ISF*s are used for more precise *LP* filter coefficients reconstruction in case of frame erasure.

In the *EV-VBR* codec the set of *LP* parameters is computed centered on the fourth subframe, whereas the first, second, and third subframes use a linear interpolation of the *LP* filter parameters between the current and the previous frame. The interpolation is performed on the *ISP*s (Immitance Spectral Pairs). Let $\mathbf{q}_4^{(m)}$ be the *ISP* vector at the 4th subframe of the frame, and $\mathbf{q}_4^{(m-1)}$ the *ISP* vector at the 4th subframe of the past frame *m*-1. The interpolated *ISP* vectors at the 1st, 2nd, and 3rd subframes are given by the Equations:

$$\mathbf{q}_1^{(m)} = 0.55\mathbf{q}_4^{(m-1)} + 0.45\mathbf{q}_4^{(m)},$$

$$\mathbf{q}_2^{(m)} = 0.2\mathbf{q}_4^{(m-1)} + 0.8\mathbf{q}_4^{(m)},$$

$$\tag{35}$$

$$\mathbf{q}_3^{(m)} = 0.04\mathbf{q}_4^{(m-1)} + 0.96\mathbf{q}_4^{(m)}.$$

This interpolation is however not directly suited for the *TM* coding technique in the case of erasure of the previous frame. When the frame preceding the *TM* frame is missing, it can be supposed that the last correctly received frame is unvoiced. It is more efficient in this situation to reconstruct the *ISF* vector for the missing frame with different interpolation constants and it does not matter if we have some *ISF*s information from *FER* protection bits available or not. In general, the interpolation is using the previous frame *ISP*s more heavily. The *ISP* vectors for the missing frame *m* can be given at the decoder, for example by using the following Equations:

$$\mathbf{q}_1^{(m)} = \mathbf{q}_4^{(m-1)},$$

$$\mathbf{q}_2^{(m)} = \mathbf{q}_4^{(m-1)},$$

$$\tag{36}$$

$$\mathbf{q}_3^{(m)} = 0.7\mathbf{q}_4^{(m-1)} + 0.3\mathbf{q}_4^{(m)},$$

$$\mathbf{q}_4^{(m)} = 0.1\mathbf{q}_4^{(m-1)} + 0.9\mathbf{q}_4^{(m)}.$$

The following correctly received *TM* frame *m*+1 then uses *LP* coefficients interpolation described by the Equations (35). Also the interpolation coefficients in Equations (36) are given as a non-limitative example. The final coefficients could be different and additionally it is desirable to use one set of interpolation coefficients when some *ISF* information from the previous frame is available and another set when *ISF* information from the previous frame is not available (i.e. there are no frame erasure protection bits in the bit stream).

### Pitch Period and Gain Encoding in *TM* Frames in *EV-VBR* Codec

The value of the pitch period $T_0$ is transmitted for every subframe in the generic encoding mode used in the *EV-VBR* codec. In the 1st and 3rd subframes, an 8-bit encoding is used while the pitch period value is transferred with fractional (½ for $T_0$ in the range $[T_{min}, 91½]$) or integer (for $T_0$ in the range [92, $T_{max}$]) resolution. In the 2nd and 4th subframes, a delta search is used and the pitch period value always with fractional resolution is coded with five (5) bits. Delta search means a search within the range $[T_{0p} - 8, T_{0p}+7½]$, where $T_{0p}$ is the nearest integer to the fractional pitch period of the previous (1st or 3rd) subframe. The values of the pitch period are limited in the *EV-VBR* codec to values within the range $[T_{min}, T_{max}]$, where $T_{min} = 34$ and $T_{max} = 231$.

The pitch gain $g_p$ and the fixed codebook gain $g_c$ are encoded in the *EV-VBR* codec in principle in the same manner as in the *AMR-WB+* codec [5]. First an estimation of a non-predictive scaled fixed codebook energy is calculated for all subframes in a frame and quantized with three (3) bits once per frame (see the parameter energy estimate in Table 9). Then the pitch gain $g_p$ and the fixed codebook gain $g_c$ are vector quantized and coded in one step using five (5) bits for every subframe.

The estimated fixed codebook energy is computed and quantized as follows. First, the *LP* residual energy is computed in each subframe *k* using the following Equation:

$$E_{res}(k) = 10\log_{10}\left(\frac{1}{N}\sum_{n=0}^{N-1}u^2(n)\right), \qquad (37)$$

where $u(n)$ is the LP residual signal. Then the average residual energy per subframe is found through the following Equation:

$$\overline{E}_{res} = \frac{1}{4}\sum_{k=0}^{3}E_{res}(k). \qquad (38)$$

The fixed codebook energy is estimated from the residual energy by removing an estimate of the adaptive codebook contribution. This is done by removing an energy related to the average normalized correlation obtained from the two open-loop pitch analyses performed in the frame. The following Equation is used:

$$E_s = \overline{E}_{res} - 10\overline{R}, \qquad (39)$$

where $\overline{R}$ is the average of the normalized pitch correlations obtained from the open-loop pitch analysis for each half-frame of the current frame. The estimated scaled fixed codebook energy is not dependant on the previous frame energy and thus the gain encoding principle is robust to frame erasures.

Once the estimation of the fixed codebook energy is found, the pitch gain and the fixed codebook gain correction are computed: the estimated scaled fixed codebook energy is used to calculate the estimated fixed codebook gain and the correction factor $Y$ (ratio between the true and the estimated fixed codebook gains). The value $Y$ is vector quantized together with the pitch gain using five (5) bits per subframe. For the design of the quantizer, a modified $k$-means method [4] is used. The pitch gain is restricted within the interval <0; 1.2> during the codebook initialization and <0; $\infty$> during the iterative codebook improvement. Likewise, the correction factor $Y$ is limited by <0; 5> during initialization and <0; $\infty$> during the codebook improvement. The modified $k$-means algorithm seeks to minimize the following criterion:

$$E = g_p^2\mathbf{y}_1^T\mathbf{y}_1 - 2g_p\mathbf{x}_1^T\mathbf{y}_1 + g_c^2\mathbf{y}_2^T\mathbf{y}_2 - 2g_c\mathbf{x}_1^T\mathbf{y}_2 + 2g_pg_c\mathbf{y}_1^T\mathbf{y}_2. \qquad (40)$$

When using the *TM* coding technique, transmission of the pitch period and both pitch and fixed codebook gains may not be required for subframes where there is no important glottal impulse, and only the fixed codebook contribution may be computed.

The following is a list and description of all *TM* configurations:

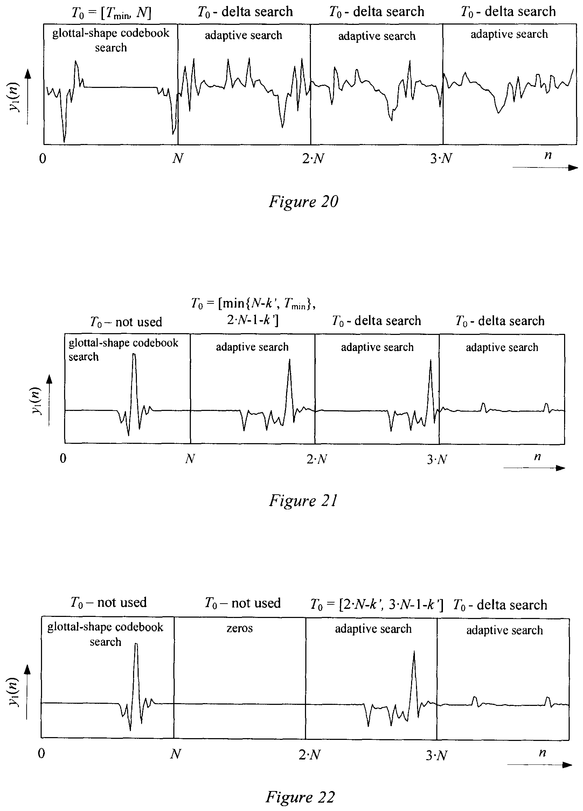

**Configuration TRANSITION_1_1** (Figure 20) - In this configuration one or two first glottal impulses appear in the first subframe that is processed using the glottal-shape codebook search. This means that the pitch period value in the first subframe can have a maximum value less than the subframe length, i.e. $T_{min} < T_0 < N$. With the integer resolution it can be coded with five (5) bits. The pitch periods in the next subframes are found using 5-bits delta search with a fractional resolution.

This is the most bit-demanding configuration of the *TM* coding technique, i.e. when the glottal-shape codebook is used in the first subframe and the pitch period $T_0$ is transmitted for $Q(z)$ filter determination, or for the adaptive codebook search in the part of the first subframe. This configuration uses in the first subframe the procedure as described above. This configuration is used in the *EV-VBR* codec also when only one glottal impulse appears in the first subframe. Here the pitch period $T_0$ holds $T_0 < N$ and it is used for periodicity enhancement [1] in fixed codebook search.

**Configuration TRANSITION_1_2** (Figure 21) - When the configuration TRANSITION_1_2 is used, the first subframe is processed using the glottal-shape codebook search. The pitch period is not needed and all following subframes are processed using the adaptive codebook search. Because the second subframe is known to contain the second glottal impulse, the pitch period maximum value holds $T_0 \leq 2 \cdot N - 1$. This maximum value can be further reduced thanks to knowledge of the glottal impulse position k'. The pitch period value in the second subframe is then coded using seven (7) bits with a fractional resolution in the whole range. In the third and fourth subframes, delta search using five (5) bits is used with a fractional resolution.

**Configuration TRANSITION_1_3** (Figure 22) - When the configuration TRANSITION_1_3 is used the first subframe is processed using the glottal-shape codebook search again with no use of the pitch period. Because the second subframe of the *LP* residual signal contains no glottal impulse and the adaptive search is useless, the first stage excitation signal is replaced by zeros in the second subframe. The adaptive codebook parameters ($T_0$ and $g_p$) are not transmitted in the second subframe and saved bits are used for the *FCB* size increase in the third subframe. Because the second subframe contains a minimum of the useful information, only the 12-bits *FCB* is used and the 20-bits *FCB* is used in the fourth subframe. The first stage excitation signal in the third subframe is constructed using the adaptive codebook search with the pitch period maximum value ($3 \cdot N - 1 - k'$) and minimum value ($2 \cdot N - k'$); thus only a 7-bits encoding of the pitch period with fractional resolution over all the range is used. The fourth subframe is processed using the adaptive search again with a 5-bits delta search encoding of the pitch period value. In the second subframe only the fixed codebook gain $g_c$ is transmitted. Consequently, only two (2) or three (3) bits are needed for gain quantization instead of the 5-bits quantizer used in the subframe with traditional *ACELP* encoding (i.e. when gains $g_p$ and $g_c$ are transmitted). This is valid also for all the following configurations. The decision as to whether the gain quantizer should use two (2) or three (3) bits is made to fit the number of bits available in the frame.

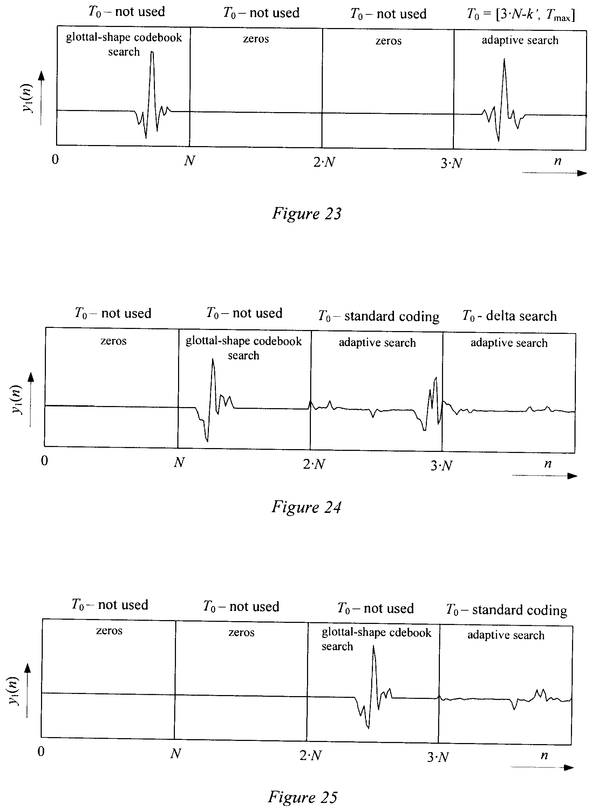

**Configuration TRANSITION_1_4** (Figure 23) - When the configuration TRANSITION_1_4 is used, the first subframe is processed using the glottal-shape codebook search. Again, the pitch period does not need to be transmitted. But because the *LP* residual signal contains no glottal impulse in the second and also in the third subframe, the adaptive codebook search is useless for these two subframes. Again, the first stage excitation signal in these subframes is replaced by zeros and saved bits are used for the *FCB* size increase so that all subframes can benefit and use the 20-bits *FCB*s. The pitch period value is transmitted only in the fourth subframe and its minimum value is ($3 \cdot N - k'$). The maximum value of the pitch period is limited by $T_{max}$. It does not matter if the second glottal impulse appears in the fourth subframe or not (the second glottal impulse can be present in the next frame if $k' + T_{max} \geq N$).
The absolute value of the pitch period is used at the decoder for the frame concealment; therefore this absolute value of the pitch period is transmitted in the situation when the second glottal impulse appears in the next frame. When a frame m preceding the *TM* frame m+1 is missing, the correct knowledge of the pitch period value from the frames m-1 and m+1 helps to reconstruct the missing part of the synthesis signal in the frame *m* successfully.

**Configuration TRANSITION_2** (Figure 24) - When the first glottal impulse appears in the second subframe and only frames after voiced onset frames are encoded using the *TM* coding technique (i.e. the voiced onset frames are encoded with the legacy generic encoding), the pitch period is transmitted only in the third and fourth subframes. In this case, only fixed codebook parameters are transmitted in the first subframe.
The frame shown in Figure 24 supposes the configuration when *TM* is not used in voiced onset frames. If *TM* is used also in the voiced onset frames, the configuration TRANSITION_2a is used where the pitch period $T_0$ is transmitted in the second subframe for using the procedure as described above.

**Configuration TRANSITION_3** (Figure 25) - When the first glottal impulse appears in the third subframe and only frames after the voiced onset frames are encoded using the *TM* coding technique (i.e. the voiced onset frames are coded with the legacy generic encoding), the pitch period is transmitted only in the fourth subframe. In this case only fixed codebook parameters are transmitted in the first and second subframes.
The pitch period is still transmitted for the third subframe in the bit stream. However it is not useful if the *TM* coding technique is not used to encode the voiced onset frames. This value is useful only when voiced onset frames are encoded using the *TM* coding technique.

**Configuration TRANSITION_4** (Figure 26) - When the first glottal impulse appears in the fourth subframe and only frames after voiced onset frames are encoded using the *TM* coding technique (i.e. the voiced onset frames are encoded with the legacy generic encoding), the pitch period value information is not used in this subframe. However the pitch period value is used in the frame concealment at the decoder (this value is used for the missing frame reconstruction when the frame preceding the *TM* frame is missing). Thus the pitch value is transmitted only in the fourth subframe and only fixed codebook parameters are transmitted in the first, second and third subframes (the gain pitch $g_p$ is not required). The saved bits allow for the 20-bits *FCB* to be used in every subframe.

Although the present invention has been described in the foregoing description in connection with a non-restrictive illustrative embodiment thereof, this non-restrictive illustrative embodiment can be modified at will, within the scope of the appended claims, without departing from the scope of the present invention.

**References**

[1] B. BESSETTE, R. SALAMI, R. LEFEBVRE, M. JELINEK, J. ROTOLA-PUKKILA, J. VAINIO, H. MIKKOLA, and K. JARVINEN, "The Adaptive Multi-Rate Wideband Speech Codec (AMR-WB)", Special Issue of IEEE Transactions on Speech and Audio Processing, Vol. 10, No. 8, pp. 620-636, November 2002.
[2] R. SALAMI, C. LAFLAMME, J-P. ADOUL, and D. MASSALOUX, "A toll quality 8 kb/s speech codec for the personal communications system (PCS)", IEEE Trans. on Vehicular Technology, Vol. 43, No. 3, pp. 808-816, August 1994.
[3] 3GPP2 Tech. Spec. C.S0052-A v1.0, "Source-Controlled Variable-Rate Multimode Wideband Speech Codec (VMR-WB), Service Options 62 and 63 for Spread Spectrum Systems, "Apr. 2005; http://www.3gpp2.org
[4] S. P. Lloyd, "Least squares quantization in PCM," IEEE Transactions on Information Theory, Vol. 28, No.2, pp. 129-136, March 1982.
[5] 3GPP Tech. Spec. 26.290, "Adaptive Multi-Rate - Wideband (AMR-WB+) codec; Transcoding functions," June 2005.
[6] "Extended high-level description of the Q9 EV-VBR baseline codec," ITU-T SG16 Tech. Cont. COM16-C199R1-E, June 2007.

**Claims**

1. A transition mode device for use in a predictive-type sound signal codec for producing a transition mode excitation replacing an adaptive codebook excitation in a transition frame and/or at least one frame following the transition in the sound signal, comprising:

   an input for receiving a codebook index; and
   a transition mode codebook for generating a set of codevectors independent from past excitation, the transition mode codebook being responsive to the codebook index for generating, in the transition frame and/or the at least one frame following the transition, one of the codevectors of the set corresponding to said transition mode excitation;
   wherein the transition mode codebook comprises a codebook of glottal impulse shapes.

2. A transition mode device as defined in claim 1, wherein the sound signal comprises a speech signal and wherein the transition frame is selected from the group consisting of a frame comprising a voiced onset, and a frame comprising a transition between two different voiced sounds.

3. A transition mode device as defined in claim 1, wherein the transition frame and/or the at least one frame following the transition each comprise a plurality of subframes, and wherein the transition mode codebook is used in a first part of the subframes and a predictive-type codebook of the predictive-type codec is used in a second part of the subframes.

4. A transition mode device as defined in claim 1, wherein the transition frame and/or the at least one frame following the transition each comprise a plurality of subframes, and wherein the transition mode codebook is used only in the subframe containing a first glottal impulse of a current frame.

5. A transition mode device as defined in claim 4, comprising means for producing, in at least one subframe preceding the subframe using the transition mode codebook, a global excitation signal comprising exclusively an innovation codebook component.

6. A transition mode device as defined in claim 1, wherein the codebook of glottal impulse shapes includes a predetermined number of different shapes of glottal impulses, and wherein each shape of glottal impulse is positioned at a plurality of different positions in the codevectors to form a plurality of different codevectors of the codebook of glottal impulse shapes.

7. A transition mode device as defined in claim 6, wherein the codebook of glottal impulse shapes comprises a generator of codevectors containing only one non-zero element and a shaping filter for processing the codevectors containing only one non-zero element to produce codevectors representing glottal impulse shapes centered at different positions.

**8.** A transition mode device as defined in claim 7, wherein the transition frame and/or the at least one frame following the transition each comprise a plurality of subframes, the codebook of glottal impulse shapes further comprises a repetition filter positioned downstream of the shaping filter for repeating, when there are more than one glottal impulse per subframe, the glottal impulse shape after a pitch period has elapsed.

**9.** A transition mode device as defined in claim 6, wherein the glottal impulse shapes comprise first and last samples wherein a predetermined number of the first and last samples are truncated.

**10.** An encoder device for generating a transition mode excitation replacing an adaptive codebook excitation in a transition frame and/or at least one frame following the transition in a sound signal, comprising:

a generator of a codebook search target signal;
a transition mode codebook for generating a set of codevectors independent from past excitation, wherein the codevectors of said set each corresponds to a respective transition mode excitation and wherein the transition mode codebook comprises a codebook of glottal impulse shapes;
a searcher of the transition mode codebook for finding the codevector of said set corresponding to a transition mode excitation optimally corresponding to the codebook search target signal.

**11.** An encoder device as defined in claim 10, wherein the searcher applies a given criterion to every glottal impulse shape of the codebook of glottal impulse shapes and finds as the codevector optimally corresponding to the codebook search target signal the codevector of the set corresponding to a maximum value of said criterion.

**12.** An encoder device as defined in claim 11, wherein the searcher identifies the found codevector by means of transition mode parameters selected from the group consisting of a transition mode configuration identification, a glottal impulse shape, a position of the glottal impulse shape centre in the found codevector, a transition mode gain, a sign of the transition mode gain and a closed-loop pitch period.

**13.** An encoder device as defined in claim 10, wherein the sound signal comprises a speech signal and wherein the transition frame is selected from the group consisting of a frame comprising a voiced onset, and a frame comprising a transition between two different voiced sounds.

**14.** An encoder device as defined in claim 10, wherein the transition frame and/or the at least one frame following the transition each comprise a plurality of subframes, and wherein the searcher searches the transition mode codebook in a first part of the subframes and a predictive-type codebook of the encoder device in a second part of the subframes.

**15.** An encoder device as defined in claim 10, wherein the transition frame and/or the at least one frame following the transition each comprise a plurality of subframes, and wherein the transition mode codebook is used only in the subframe containing a first glottal impulse of a current frame.

**16.** An encoder device as defined in claim 15, comprising means for producing, in at least one subframe preceding the subframe using the transition mode codebook, a global excitation signal comprising exclusively an innovation codebook component.

**17.** An encoder device as defined in claim 10, wherein the codebook of glottal impulse shapes includes a predetermined number of different shapes of glottal impulses, and wherein each shape of glottal impulse is positioned at a plurality of different positions in the codevectors to form a plurality of different codevectors of the codebook of glottal impulse shapes.

**18.** An encoder device as defined in claim 17, wherein the codebook of glottal impulse shapes comprises a generator of codevectors containing only one non-zero element and a shaping filter for processing the codevectors containing only one non-zero element to produce codevectors representing glottal impulse shapes centered at different positions.

**19.** An encoder device as defined in claim 10, further comprising:

a generator of an innovation codebook search target signal;

an innovation codebook for generating a set of innovation codevectors each corresponding to a respective innovation excitation;

a searcher of the innovation codebook for finding the innovation codevector of said set corresponding to an innovation excitation optimally corresponding to the innovation codebook search target signal; and

an adder of the transition mode excitation and the innovation excitation to produce a global excitation for a sound signal synthesis filter;

wherein the transition frame and/or the at least one frame following the transition each comprise a plurality of subframes and wherein, depending on where a glottal impulse or impulses are located in the subframes, the encoder device comprises means for encoding the subframes using at least one of the transition mode codebook, the adaptive codebook and the innovation codebook.

20. A decoder device comprising the transition mode device as defined in any one of claims 1 to 9, for producing the transition mode excitation replacing the adaptive codebook excitation in the transition frame and/or the at least one frame following the transition in the sound signal.

21. A decoder device as defined in claim 20, further comprising:

an input for receiving an innovation codebook index;

an innovation codebook for generating a set of innovation codevectors, the innovation codebook being responsive to the innovation codebook index for generating in the transition frame and/or the at least one frame following the transition one of the innovation codevectors of the set corresponding to an innovation excitation;

an adder of the transition mode excitation and the innovation excitation to produce a global excitation for a sound signal synthesis filter.

22. A transition mode method for use in a predictive-type sound signal codec for producing a transition mode excitation replacing an adaptive codebook excitation in a transition frame and/or at least one frame following the transition in the sound signal, comprising:

providing a transition mode codebook for generating a set of codevectors independent from past excitation, wherein the transition mode codebook comprises a codebook of glottal impulse shapes;

supplying a codebook index to the transition mode codebook; and

generating, by means of the transition mode codebook and in response to the codebook index, one of the codevectors of the set corresponding to said transition mode excitation.

23. A transition mode method as defined in claim 22, wherein the sound signal comprises a speech signal and said method comprises selecting the transition frame from the group consisting of a frame comprising a voiced onset, and a frame comprising a transition between two different voiced sounds.

24. A transition mode method as defined in claim 22, wherein the transition frame and/or the at least one frame following the transition each comprise a plurality of subframes, and said method comprises using the transition mode codebook in a first part of the subframes and a predictive-type codebook of the predictive-type codec in a second part of the subframes.

25. A transition mode method as defined in claim 22, wherein the transition frame and/or the at least one frame following the transition each comprise a plurality of subframes, and wherein said method comprises using the transition mode codebook in the subframe containing a first glottal impulse of a current frame.

26. A transition mode method as defined in claim 25, comprising producing, in at least one subframe preceding the subframe using the transition mode codebook, a global excitation signal comprising exclusively an innovation codebook component.

27. A transition mode method as defined in claim 22, wherein the codebook of glottal impulse shapes includes a predetermined number of different shapes of glottal impulses, and wherein the transition mode method comprises forming in the codebook of glottal impulse shapes a plurality of different codevectors by positioning each shape of glottal impulse at a plurality of different positions in the codevector.

28. A transition mode method as defined in claim 27, comprising, in the codebook of glottal impulse shapes, generating codevectors containing only one non-zero element and processing through a shaping filter the codevectors containing only one non-zero element to produce codevectors representing glottal impulse shapes centered at different positions.

29. An encoding method for generating a transition mode excitation replacing an adaptive codebook excitation in a transition frame and/or at least one frame following the transition in a sound signal, comprising:

generating a codebook search target signal;
providing a transition mode codebook for generating a set of codevectors independent from past excitation, the codevectors of said set each corresponding to a respective transition mode excitation, wherein the transition mode codebook comprises a codebook of glottal impulse shapes;
searching the transition mode codebook for finding the codevector of said set corresponding to a transition mode excitation optimally corresponding to the codebook search target signal.

30. An encoding method as defined in claim 29, wherein searching the transition mode codebook comprises applying a given criterion to every glottal impulse shape of the codebook of glottal impulse shapes and finding as the codevector optimally corresponding to the codebook search target signal the codevector of the set corresponding to a maximum value of said criterion.

31. An encoding method as defined in claim 29, wherein the sound signal comprises a speech signal and said method further comprises selecting the transition frame from the group consisting of a frame comprising a voiced onset and a frame comprising a transition between two different voiced sounds.

32. An encoding method as defined in claim 29, wherein the transition frame and/or the at least one frame following the transition each comprise a plurality of subframes, and wherein searching the transition mode codebook comprises searching the transition mode codebook in a first part of the subframes and searching a predictive-type codebook of the encoder device in a second part of the subframes.

33. An encoding method as defined in claim 29, wherein the transition frame and/or the at least one frame following the transition each comprise a plurality of subframes, and wherein said method comprises using the transition mode codebook in the subframe containing a first glottal impulse of a current frame.

34. An encoding method as defined in claim 33, comprising producing, in at least one subframe preceding the subframe using the transition mode codebook, a global excitation signal comprising exclusively an innovation codebook component.

35. An encoding method as defined in claim 29, wherein the codebook of glottal impulse shapes includes a predetermined number of different shapes of glottal impulses, and the encoding method comprises forming a plurality of different codevectors of the codebook of glottal impulse shapes by positioning each shape of glottal impulse at a plurality of different positions in the codevectors.

36. An encoding method as defined in claim 35, wherein generating in the glottal-impulse-shape codebook the set of codevectors independent from past excitation comprises generating codevectors containing only one non-zero element and processing through a shaping filter the codevectors containing only one non-zero element to produce codevectors representing glottal impulse shapes centered at different positions.

37. An encoding method as defined in claim 29, further comprising:

generating an innovation codebook search target signal;
providing an innovation codebook for generating a set of innovation codevectors each corresponding to a respective innovation excitation;
searching the innovation codebook for finding the innovation codevector of said set corresponding to an innovation excitation optimally corresponding to the innovation codebook search target signal; and
adding the transition mode excitation and the innovation excitation to produce a global excitation for a sound signal synthesis filter;
wherein the transition frame and/or the at least one frame following the transition each comprise a plurality of subframes and wherein, depending on where the glottal impulse or impulses are located in the subframes, the encoding method comprises encoding the subframes using at least one of the transition mode codebook, the adaptive codebook and the innovation codebook.

38. A decoding method comprising the transition method as defined in any one of claims 22 to 28 for producing the transition mode excitation replacing the adaptive codebook excitation in the transition frame and/or the at least one frame following the transition in the sound signal.

39. A decoding method as defined in claim 38, further comprising:

   providing an innovation codebook for generating a set of innovation codevectors;
   supplying an innovation codebook index to the innovation codebook;
   generating, by means of the innovation codebook and in response to the innovation codebook index, one of the innovation codevectors of the set corresponding to an innovation excitation; and
   adding the transition mode excitation and the innovation excitation to produce a global excitation for a sound signal synthesis filter.

**Patentansprüche**

1. Übergangsmodus-Einrichtung zur Verwendung in einem Schallsignal-Codec vom Vorhersagetyp zum Erzeugen einer Übergangsmodus-Anregung, die eine adaptive Codebuch-Anregung in einem Übergangsrahmen und/oder mindestens einem Rahmen ersetzt, der auf den Übergang in dem Schallsignal folgt, mit:

   einem Eingang für den Empfang eines Codebuch-Indexes und
   einem Übergangsmodus-Codebuch zum Erzeugen eines Satzes von Codevektoren unabhängig von einer früheren Anregung, wobei das Übergangsmodus-Codebuch auf den Codebuch-Index reagiert, um in dem Übergangsrahmen und/oder dem mindestens einen Rahmen, der auf den Übergang folgt, einen der Codevektoren des Satzes zu erzeugen, welcher der Übergangsmodus-Anregung entspricht,
   wobei das Übergangsmodus-Codebuch ein Codebuch von glottalen Impulsformen aufweist.

2. Übergangsmodus-Einrichtung nach Anspruch 1, wobei das Schallsignal ein Sprachsignal aufweist und wobei der Übergangsrahmen aus der Gruppe ausgewählt ist, die aus einem Rahmen, der einen stimmhaften Beginn aufweist, und einem Rahmen besteht, der einen Übergang zwischen zwei unterschiedlichen stimmhaften Lauten aufweist.

3. Übergangsmodus-Einrichtung nach Anspruch 1, wobei der Übergangsrahmen und/oder der mindestens eine Rahmen, der auf den Übergang folgt, jeweils mehrere Unterrahmen aufweist und wobei das Übergangsmodus-Codebuch in einem ersten Teil der Unterrahmen verwendet wird und ein Vorhersagetyp-Codebuch des Vorhersagetyp-Codecs in einem zweiten Teil der Unterrahmen verwendet wird.

4. Übergangsmodus-Einrichtung nach Anspruch 1, wobei der Übergangsrahmen und/oder der mindestens eine Rahmen, der auf den Übergang folgt, jeweils mehrere Unterrahmen aufweist und wobei das Übergangsmodus-Codebuch nur in dem Unterrahmen verwendet wird, der einen ersten glottalen Impuls eines aktuellen Rahmens enthält.

5. Übergangsmodus-Einrichtung nach Anspruch 4, die Mittel aufweist, um in mindestens einem Unterrahmen, der dem Unterrahmen vorausgeht, der das Übergangsmodus-Codebuch verwendet, ein globales Anregungssignal zu erzeugen, das exklusiv eine Innovationscodebuch-Komponente aufweist.

6. Übergangsmodus-Einrichtung nach Anspruch 1, wobei das Codebuch von glottalen Impulsformen eine vorgegebene Anzahl von unterschiedlichen Formen glottaler Impulse aufweist und wobei jede Form eines glottalen Impulses an mehreren unterschiedlichen Positionen in den Codevektoren positioniert ist, um mehrere unterschiedliche Codevektoren des Codebuchs der glottalen Impulsformen auszubilden.

7. Übergangsmodus-Einrichtung nach Anspruch 6, wobei das Codebuch der glottalen Impulsformen einen Erzeuger von Codevektoren, die nur ein von Null verschiedenes Element enthalten, und ein Formgebungsfilter für die Bearbeitung der Codevektoren aufweist, die nur ein von Null verschiedenes Element enthalten, um Codevektoren zu erzeugen, die glottale Impulsformen aufweisen, die an unterschiedlichen Positionen zentriert sind.

8. Übergangsmodus-Einrichtung nach Anspruch 7, wobei der Übergangsrahmen und/oder der mindestens eine Rahmen, der auf den Übergang folgt, jeweils mehrere Unterrahmen aufweist, wobei das Codebuch der glottalen Impulsformen ferner ein Wiederholungsfilter aufweist, das dem Formgebungsfilter nachgeordnet positioniert ist, um die glottale Impulsform nach dem Ablauf einer Pitch-Periode zu wiederholen, wenn es mehr als einen glottalen Impuls pro Unterrahmen gibt.

**9.** Übergangsmodus-Einrichtung nach Anspruch 6, wobei die glottalen Impulsformen erste und letzte Abtastwerte aufweisen, wobei eine vorgegebene Anzahl der ersten und letzten Abtastwerte beschränkt ist.

**10.** Codiereinrichtung zum Erzeugen einer Übergangsmodus-Anregung, die eine adaptive Codebuch-Anregung in einem Übergangsrahmen und/oder mindestens einem Rahmen ersetzt, der auf den Übergang in einem Schallsignal folgt, mit:

einem Erzeuger eines Codebuch-Suchzielsignals,
einem Übergangsmodus-Codebuch zum Erzeugen eines Satzes von Codevektoren unabhängig von einer früheren Anregung, wobei die Codevektoren des Satzes jeweils zu einer entsprechenden Übergangsmodus-Anregung gehören und wobei das Übergangsmodus-Codebuch ein Codebuch von glottalen Impulsformen aufweist,
einer Sucheinrichtung des Übergangsmodus-Codebuchs zum Auffinden des Codevektors des Satzes, der zu einer Übergangsmodus-Anregung gehört, die dem Codebuch-Suchzielsignal optimal entspricht.

**11.** Codiereinrichtung nach Anspruch 10, wobei die Sucheinrichtung ein gegebenes Kriterium auf jede glottale Impulsform des Codebuchs der glottalen Impulsformen anwendet und den Codevektor des Satzes, der zu einem Maximalwert des Kriteriums gehört, als den Codevektor auffindet, der optimal dem Codebuch-Suchzielsignal entspricht.

**12.** Codiereinrichtung nach Anspruch 11, wobei die Sucheinrichtung den gefundenen Codevektor mithilfe von Übergangsmodus-Parametern identifiziert, die aus der Gruppe ausgewählt sind, die aus einer Übergangsmodus-Konfigurationsidentifizierung, einer glottalen Impulsform, einer Position des Zentrums der glottalen Impulsform in dem gefundenen Codevektor, einer Übergangsmodus-Verstärkung, einem Vorzeichen der Übergangsmodus-Verstärkung und einer Closed-Loop-Pitch-Periode besteht.

**13.** Codiereinrichtung nach Anspruch 10, wobei das Schallsignal ein Sprachsignal aufweist und wobei der Übergangsrahmen aus der Gruppe ausgewählt ist, die aus einem Rahmen, der einen stimmhaften Beginn aufweist, und einem Rahmen besteht, der einen Übergang zwischen zwei unterschiedlichen stimmhaften Lauten aufweist.

**14.** Codiereinrichtung nach Anspruch 10, wobei der Übergangsrahmen und/oder der mindestens eine Rahmen, der auf den Übergang folgt, jeweils mehrere Unterrahmen aufweist und wobei die Sucheinrichtung das Übergangsmodus-Codebuch in einem ersten Teil der Unterrahmen und ein Vorhersagetyp-Codebuch der Codiereinrichtung in einem zweiten Teil der Unterrahmen durchsucht.

**15.** Codiereinrichtung nach Anspruch 10, wobei der Übergangsrahmen und/oder der mindestens eine Rahmen, der auf den Übergang folgt, jeweils mehrere Unterrahmen aufweist und wobei das Übergangsmodus-Codebuch nur in dem Unterrahmen verwendet wird, der einen ersten glottalen Impuls eines aktuellen Rahmens enthält.

**16.** Codiereinrichtung nach Anspruch 15, die Mittel aufweist, um in mindestens einem Unterrahmen, der dem Unterrahmen vorausgeht, der das Übergangsmodus-Codebuch verwendet, ein globales Anregungssignal zu erzeugen, das exklusiv eine Innovationscodebuch-Komponente aufweist.

**17.** Codiereinrichtung nach Anspruch 10, wobei das Codebuch von glottalen Impulsformen eine vorgegebene Anzahl von unterschiedlichen Formen glottaler Impulse aufweist und wobei jede Form eines glottalen Impulses an mehreren unterschiedlichen Positionen in den Codevektoren positioniert ist, um mehrere unterschiedliche Codevektoren des Codebuchs der glottalen Impulsformen auszubilden.

**18.** Codiereinrichtung nach Anspruch 17, wobei das Codebuch der glottalen Impulsformen einen Erzeuger von Codevektoren, die nur ein von Null verschiedenes Element enthalten, und ein Formgebungsfilter für die Bearbeitung der Codevektoren aufweist, die nur ein von Null verschiedenes Element enthalten, um Codevektoren zu erzeugen, die glottale Impulsformen aufweisen, die an unterschiedlichen Positionen zentriert sind.

**19.** Codiereinrichtung nach Anspruch 10, ferner mit:

einem Erzeuger eines Innovationscodebuch-Suchzielsignals,
einem Innovationscodebuch zum Erzeugen eines Satzes von Innovationscodevektoren, die jeweils zu einer entsprechenden Innovationsanregung gehören, einer Sucheinrichtung des Innovationscodebuchs zum Auffinden des Innovationscodevektors des Satzes, der zu einer Übergangsmodus-Anregung gehört, die dem Innovationscodebuch-Suchzielsignal optimal entspricht, und
einem Addierer der Übergangsmodus-Anregung und der Innovationsanregung, um eine globale Anregung für ein Schallsignal-Synthesefilter zu erzeugen,
wobei der Übergangsrahmen und/oder der mindestens eine Rahmen, der auf den Übergang folgt, jeweils mehrere Unterrahmen aufweist und wobei die Codiereinrichtung in Abhängigkeit davon, wo ein glottaler Impuls oder glottale Impulse in den Unterrahmen liegen, Mittel aufweist, die Unterrahmen zu codieren, wobei mindestens eines von dem Übergangsmodus-Codebuch, dem adaptiven Codebuch und dem Innovationscodebuch verwendet wird.

20. Decodiereinrichtung mit der Übergangsmodus-Einrichtung nach einem der Ansprüche 1 bis 9 zum Erzeugen der Übergangsmodus-Anregung, welche die adaptive Codebuchanregung in dem Übergangsrahmen und/oder dem mindestens einem Rahmen, der auf den Übergang in dem Schallsignal folgt, ersetzt.

21. Decodiereinrichtung nach Anspruch 20, ferner mit:

einem Eingang zum Empfangen eines Innovations-Codebuchindexes,
einem Innovationscodebuch zum Erzeugen eines Satzes von Innovationscodevektoren, wobei das Innovationscodebuch auf den Innovationscodebuchindex reagiert, um in dem Übergangsrahmen und/oder dem mindestens einen Rahmen, der auf den Übergang folgt, einen der Innovationscodevektoren des Satzes zu erzeugen, der einer Innovationsanregung entspricht,
einem Addierer der Übergangsmodus-Anregung und der Innovationsanregung, um eine globale Anregung für ein Schallsignal-Synthesefilter zu erzeugen.

22. Übergangsmodus-Verfahren zum Einsatz in einem Schallsignal-Codec vom Vorhersagetyp für das Erzeugen einer Übergangsmodus-Anregung, die eine adaptive Codebuch-Anregung in einem Übergangsrahmen und/oder mindestens einem Rahmen ersetzt, der auf den Übergang in dem Schallsignal folgt, umfassend:

Bereitstellen eines Übergangsmodus-Codebuchs zum Erzeugen eines Satzes von Codevektoren unabhängig von einer früheren Anregung, wobei das Übergangsmodus-Codebuch ein Codebuch von glottalen Impulsformen aufweist,
Eingeben eines Codebuch-Indexes in das Übergangsmodus-Codebuch und
Erzeugen eines der Codevektoren des Satzes, welcher der Übergangsmodus-Anregung entspricht, mithilfe des Übergangsmodus-Codebuchs und in Reaktion auf den Codebuch-Index.

23. Übergangsmodus-Verfahren nach Anspruch 22, wobei
das Schallsignal ein Sprachsignal aufweist und das Verfahren ein Auswählen des Übergangsrahmens aus der Gruppe umfasst, die aus einem Rahmen, der einen stimmhaften Beginn aufweist, und einem Rahmen besteht, der einen Übergang zwischen zwei unterschiedlichen stimmhaften Lauten aufweist.

24. Übergangsmodus-Verfahren nach Anspruch 22, wobei
der Übergangsrahmen und/oder der mindestens eine Rahmen, der auf den Übergang folgt, jeweils mehrere Unterrahmen aufweist und wobei das Verfahren die Verwendung des Übergangsmodus-Codebuchs in einem ersten Teil der Unterrahmen und eines Vorhersagetyp-Codebuchs des Vorhersagetyp-Codecs in einem zweiten Teil der Unterrahmen umfasst.

25. Übergangsmodus-Verfahren nach Anspruch 22, wobei
der Übergangsrahmen und/oder der mindestens eine Rahmen, der auf den Übergang folgt, jeweils mehrere Unterrahmen aufweist und wobei das Verfahren die Verwendung des Übergangsmodus-Codebuchs in dem Unterrahmen umfasst, der einen ersten glottalen Impuls eines aktuellen Rahmens enthält.

26. Übergangsmodus-Verfahren nach Anspruch 25, das die Erzeugung eines globalen Anregungssignals, das exklusiv eine Innovationscodebuch-Komponente aufweist, in mindestens einem Unterrahmen umfasst, der dem Unterrahmen vorausgeht, der das Übergangsmodus-Codebuch verwendet.

**27.** Übergangsmodus-Verfahren nach Anspruch 22, wobei
das Codebuch von glottalen Impulsformen eine vorgegebene Anzahl von unterschiedlichen Formen glottaler Impulse aufweist und wobei das Übergangsmodus-Verfahren ein Ausbilden von mehreren unterschiedlichen Codevektoren in dem Codebuch der glottalen Impulsformen umfasst, indem jede Form eines glottalen Impulses an mehreren unterschiedlichen Positionen in dem Codevektor positioniert wird.

**28.** Übergangsmodus-Verfahren nach Anspruch 27, ein Erzeugen von Codevektoren in dem Codebuch von glottalen Impulsformen umfassend, die nur ein von Null verschiedenes Element enthalten, und eine Bearbeitung der Codevektoren, die nur ein von Null verschiedenes Element enthalten, durch ein Formgebungsfilter umfassend, um Codevektoren zu erzeugen, die glottale Impulsformen aufweisen, die an unterschiedlichen Positionen zentriert sind.

**29.** Codierungsverfahren zum Erzeugen einer Übergangsmodus-Anregung, die eine adaptive Codebuch-Anregung in einem Übergangsrahmen und/oder mindestens einem Rahmen ersetzt, der auf den Übergang in einem Schallsignal folgt, umfassend:

Erzeugen eines Codebuch-Suchzielsignals,
Bereitstellen eines Übergangsmodus-Codebuchs zum Erzeugen eines Satzes von Codevektoren unabhängig von einer früheren Anregung, wobei die Codevektoren des Satzes jeweils zu einer entsprechenden Übergangsmodus-Anregung gehören,
wobei das Übergangsmodus-Codebuch ein Codebuch von glottalen Impulsformen aufweist,
Durchsuchen des Übergangsmodus-Codebuchs zum Auffinden des Codevektors des Satzes, der zu einer Übergangsmodus-Anregung gehört, die dem Codebuch-Suchzielsignal optimal entspricht.

**30.** Codierungsverfahren nach Anspruch 29, wobei das Durchsuchen des Übergangsmodus-Codebuchs ein Anwenden eines gegebenen Kriteriums auf jede glottale Impulsform des Codebuchs der glottalen Impulsformen umfasst und wobei der Codevektor des Satzes, der zu einem Maximalwert des Kriteriums gehört, als der Codevektor aufgefunden wird, der optimal dem Codebuch-Suchzielsignal entspricht.

**31.** Codierungsverfahren nach Anspruch 29, wobei das Schallsignal ein Sprachsignal aufweist und wobei das Verfahren ferner ein Auswählen des Übergangsrahmens aus der Gruppe umfasst, die aus einem Rahmen, der einen stimmhaften Beginn aufweist, und einem Rahmen besteht, der einen Übergang zwischen zwei unterschiedlichen stimmhaften Lauten aufweist.

**32.** Codierungsverfahren nach Anspruch 29, wobei der Übergangsrahmen und/oder der mindestens eine Rahmen, der auf den Übergang folgt, jeweils mehrere Unterrahmen aufweist und wobei das Durchsuchen des Übergangsmodus-Codebuchs ein Durchsuchen des Übergangsmodus-Codebuchs in einem ersten Teil der Unterrahmen und ein Durchsuchen eines Vorhersagetyp-Codebuchs der Codiereinrichtung in einem zweiten Teil der Unterrahmen umfasst.

**33.** Codierungsverfahren nach Anspruch 29, wobei der Übergangsrahmen und/oder der mindestens eine Rahmen, der auf den Übergang folgt, jeweils mehrere Unterrahmen aufweist und wobei das Verfahren ein Verwenden des Übergangsmodus-Codebuchs in dem Unterrahmen umfasst, der einen ersten glottalen Impuls eines aktuellen Rahmens enthält.

**34.** Codierungsverfahren nach Anspruch 33, ein Erzeugen eines globalen Anregungssignals, das exklusiv eine Innovationscodebuch-Komponente aufweist, in mindestens einem Unterrahmen umfassend, der dem Unterrahmen vorausgeht, der das Übergangsmodus-Codebuch verwendet.

**35.** Codierungsverfahren nach Anspruch 29, wobei das Codebuch von glottalen Impulsformen eine vorgegebene Anzahl von unterschiedlichen Formen glottaler Impulse aufweist und wobei das Codierungsverfahren umfasst, dass mehrere unterschiedliche Codevektoren des Codebuchs der glottalen Impulsformen ausgebildet werden, indem jede Form eines glottalen Impulses an mehreren unterschiedlichen Positionen in den Codevektoren positioniert wird.

**36.** Codierungsverfahren nach Anspruch 35, wobei in dem Codebuch der glottalen Impulsformen das Erzeugen des Satzes von Codevektoren, die unabhängig von der letzten Anregung sind, ein Erzeugen von Codevektoren umfasst, die nur ein von Null verschiedenes Element enthalten, und ein Bearbeiten der Codevektoren, die nur ein von Null verschiedenes Element enthalten, durch ein Formgebungsfilter umfasst, um Codevektoren zu erzeugen, die glottale Impulsformen aufweisen, die an unterschiedlichen Positionen zentriert sind.

37. Codierungsverfahren nach Anspruch 29, ferner umfassend:

Erzeugen eines Innovationscodebuch-Suchzielsignals,
Bereitstellen eines Innovationscodebuchs zum Erzeugen eines Satzes von Innovationscodevektoren, die jeweils zu einer entsprechenden Innovationsanregung gehören,
Durchsuchen des Innovationscodebuchs zum Auffinden des Innovationscodevektors des Satzes, der zu einer Übergangsmodus-Anregung gehört, die dem Innovationscodebuch-Suchzielsignal optimal entspricht, und
Addieren der Übergangsmodus-Anregung und der Innovationsanregung, um eine globale Anregung für ein Schallsignal-Synthesefilter zu erzeugen,
wobei der Übergangsrahmen und/oder der mindestens eine Rahmen, der auf den Übergang folgt, jeweils mehrere Unterrahmen aufweist und wobei das Codierungsverfahren in Abhängigkeit davon, wo der glottale Impuls oder die glottalen Impulse in den Unterrahmen liegen, ein Codieren der Unterrahmen umfasst, wobei mindestens eines von dem Übergangsmodus-Codebuch, dem adaptiven Codebuch und dem Innovationscodebuch verwendet wird.

38. Decodierungsverfahren, welches das Übergangsverfahren nach einem der Ansprüche 22 bis 28 umfasst, um die Übergangsmodus-Anregung zu erzeugen, welche die adaptive Codebuchanregung in dem Übergangsrahmen und/oder dem mindestens einem Rahmen, der auf den Übergang in dem Schallsignal folgt, ersetzt.

39. Decodierungsverfahren nach Anspruch 38, ferner umfassend:

Bereitstellen eines Innovationscodebuchs zum Erzeugen eines Satzes von Innovationscodevektoren,
Liefern eines Innovations-Codebuchindexes an das Innovationscodebuch,
Erzeugen eines der Innovationscodevektoren des Satzes, der einer Innovationsanregung entspricht, mithilfe des Innovationscodebuchs und in Reaktion auf den Innovations-Codebuchindex und
Addieren der Übergangsmodus-Anregung und der Innovationsanregung, um eine globale Anregung für ein Schallsignal-Synthesefilter zu erzeugen.

**Revendications**

1. Dispositif de mode de transition destiné à être utilisé dans un codec de signal sonore de type prédictif pour produire une excitation de mode de transition remplaçant une excitation de livre de codes adaptatif dans une trame de transition et/ou au moins une trame après la transition dans le signal sonore, comprenant :

une entrée pour recevoir un indice de livre de codes ; et
un livre de codes de mode de transition pour générer un ensemble de vecteurs de code indépendants d'une excitation passée, le livre de codes de mode de transition étant sensible à l'indice de livre de codes pour générer, dans la trame de transition et/ou la ou les trames après la transition, l'un des vecteurs de code de l'ensemble correspondant à ladite excitation de mode de transition ;
dans lequel le livre de codes de mode de transition comprend un livre de codes de formes d'impulsion glottale.

2. Dispositif de mode de transition selon la revendication 1, dans lequel le signal sonore comprend un signal vocal et dans lequel la trame de transition est sélectionnée dans le groupe constitué par une trame comprenant un début voisé et une trame comprenant une transition entre deux sons voisés différents.

3. Dispositif de mode de transition selon la revendication 1, dans lequel la trame de transition et/ou la ou les trames après la transition comprennent chacune une pluralité de sous-trames et dans lequel le livre de codes de mode de transition est utilisé dans une première partie des sous-trames et un livre de codes de type prédictif du codec de type prédictif est utilisé dans une seconde partie des sous-trames.

4. Dispositif de mode de transition selon la revendication 1, dans lequel la trame de transition et/ou la ou les trames après la transition comprennent chacune une pluralité de sous-trames et dans lequel le livre de codes de mode de transition est utilisé seulement dans la sous-trame contenant une première impulsion glottale d'une trame en cours.

5. Dispositif de mode de transition selon la revendication 4, comprenant un moyen pour produire, dans au moins une sous-trame précédant la sous-trame utilisant le livre de codes de mode de transition, un signal d'excitation globale comprenant exclusivement une composante de livre de codes d'innovation.

**6.** Dispositif de mode de transition selon la revendication 1, dans lequel le livre de codes de formes d'impulsion glottale comprend un nombre prédéterminé de formes différentes d'impulsions glottales et dans lequel chaque forme d'impulsion glottale est positionnée à une pluralité de positions différentes dans les vecteurs de code afin de former une pluralité de vecteurs de code différents du livre de codes de formes d'impulsion glottale.

**7.** Dispositif de mode de transition selon la revendication 6, dans lequel le livre de codes de formes d'impulsion glottale comprend un générateur de vecteurs de code contenant seulement un élément non nul et un filtre de mise en forme pour traiter les vecteurs de code contenant seulement un élément non nul afin de produire des vecteurs de code représentant des formes d'impulsion glottale centrées à des positions différentes.

**8.** Dispositif de mode de transition selon la revendication 7, dans lequel la trame de transition et/ou la ou les trames après la transition comprennent chacune une pluralité de sous-trames, le livre de codes de formes d'impulsion glottale comprend en outre un filtre de répétition positionné en aval du filtre de mise en forme pour répéter, lorsqu'il y a au moins deux impulsions glottales par sous-trame, la forme d'impulsion glottale après qu'une période de tonie s'est écoulée.

**9.** Dispositif de mode de transition selon la revendication 6, dans lequel les formes d'impulsion glottale comprennent des premiers et des derniers échantillons dans lequel un nombre prédéterminé de premiers et de derniers échantillons sont tronqués.

**10.** Dispositif codeur pour générer une excitation de mode de transition remplaçant une excitation de livre de codes adaptatif dans une trame de transition et/ou au moins une trame après la transition dans un signal sonore, comprenant :

  un générateur d'un signal cible de recherche de livre de codes ;
  un livre de codes de mode de transition pour générer un ensemble de vecteurs de code indépendants d'une excitation passée, dans lequel les vecteurs de code dudit ensemble correspondent chacun à une excitation de mode de transition respective et dans lequel le livre de codes de mode de transition comprend un livre de codes de formes d'impulsion glottale ;
  un dispositif de recherche du livre de codes de mode de transition pour trouver le vecteur de code dudit ensemble correspondant à une excitation de mode de transition correspondant de façon optimale au signal cible de recherche de livre de codes.

**11.** Dispositif codeur selon la revendication 10, dans
lequel le dispositif de recherche applique un critère donné à chaque forme d'impulsion glottale du livre de codes de formes d'impulsion glottale et trouve, comme vecteur de code correspondant de façon optimale au signal cible de recherche de livre de codes, le vecteur de code de l'ensemble correspondant à une valeur maximale dudit critère.

**12.** Dispositif codeur selon la revendication 11, dans
lequel le dispositif de recherche identifie le vecteur de code trouvé au moyen de paramètres de mode de transition sélectionnés dans le groupe constitué par une identification de configuration de mode de transition, une forme d'impulsion glottale, une position du centre de la forme d'impulsion glottale dans le vecteur de code trouvé, un gain de mode de transition, un signe du gain de mode de transition et une période de tonie en boucle fermée.

**13.** Dispositif codeur selon la revendication 10, dans
lequel le signal sonore comprend un signal vocal et dans lequel la trame de transition est sélectionnée dans le groupe constitué par une trame comprenant un début voisé et une trame comprenant une transition entre deux sons voisés différents.

**14.** Dispositif codeur selon la revendication 10, dans
lequel la trame de transition et/ou la ou les trames après la transition comprennent chacune une pluralité de sous-trames et dans lequel le dispositif de recherche recherche le livre de codes de mode de transition dans une première partie des sous-trames et un livre de codes de type prédictif du dispositif codeur dans une seconde partie des sous-trames.

**15.** Dispositif codeur selon la revendication 10, dans
lequel la trame de transition et/ou la ou les trames après la transition comprennent chacune une pluralité de sous-trames et dans lequel le livre de codes de mode de transition est utilisé seulement dans la sous-trame contenant une première impulsion glottale d'une trame en cours.

16. Dispositif codeur selon la revendication 15, comprenant un moyen pour produire, dans au moins une sous-trame précédant la sous-trame utilisant le livre de codes de mode de transition, un signal d'excitation globale comprenant exclusivement une composante de livre de codes d'innovation.

17. Dispositif codeur selon la revendication 10, dans
lequel le livre de codes de formes d'impulsion glottale comprend un nombre prédéterminé de formes différentes d'impulsions glottales et dans lequel chaque forme d'impulsion glottale est positionnée à une pluralité de positions différentes dans les vecteurs de code afin de former une pluralité de vecteurs de code différents du livre de codes de formes d'impulsion glottale.

18. Dispositif codeur selon la revendication 17, dans
lequel le livre de codes de formes d'impulsion glottale comprend un générateur de vecteurs de code contenant seulement un élément non nul et un filtre de mise en forme pour traiter les vecteurs de code contenant seulement un élément non nul afin de produire des vecteurs de code représentant des formes d'impulsion glottale centrées à des positions différentes.

19. Dispositif codeur selon la revendication 10, comprenant en outre :

un générateur d'un signal cible de recherche de livre de codes d'innovation ;
un livre de codes d'innovation pour générer un ensemble de vecteurs de code correspondant chacun à une excitation d'innovation respective ;
un dispositif de recherche du livre de codes d'innovation pour trouver le vecteur de code d'innovation dudit ensemble correspondant à une excitation d'innovation correspondant de façon optimale au signal cible de recherche de livre de codes d'innovation ; et
un dispositif d'addition de l'excitation de mode de transition et de l'excitation d'innovation pour produire une excitation globale pour un filtre de synthèse de signal sonore ;
dans lequel la trame de transition et/ou la ou les trames après la transition comprennent chacune une pluralité de sous-trames et dans lequel, en fonction de l'endroit où une impulsion glottale ou des impulsions glottales sont localisées dans les sous-trames, le dispositif codeur comprend un moyen pour coder les sous-trames à l'aide du livre de codes de mode de transition et/ou du livre de codes adaptatif et/ou du livre de codes d'innovation.

20. Dispositif décodeur comprenant le dispositif de mode de transition selon l'une quelconque des revendications 1 à 9, pour produire l'excitation de mode de transition remplaçant l'excitation de livre de codes adaptatif dans la trame de transition et/ou la ou les trames après la transition dans le signal sonore.

21. Dispositif décodeur selon la revendication 20, comprenant en outre :

une entrée pour recevoir un indice de livre de codes d'innovation ;
un livre de codes d'innovation pour générer un ensemble de vecteurs de code d'innovation, le livre de codes d'innovation étant sensible à l'indice de livre de codes d'innovation pour générer, dans la trame de transition et/ou la ou les trames après la transition, l'un des vecteurs de code d'innovation de l'ensemble correspondant à une excitation d'innovation ;
un dispositif d'addition de l'excitation de mode de transition et de l'excitation d'innovation pour produire une excitation globale pour un filtre de synthèse de signal sonore.

22. Procédé de mode de transition destiné à être utilisé dans un codec de signal sonore de type prédictif pour produire une excitation de mode de transition remplaçant une excitation de livre de codes adaptatif dans une trame de transition et/ou au moins une trame après la transition dans le signal sonore, comportant :

fournir un livre de codes de mode de transition pour générer un ensemble de vecteurs de code indépendants d'une excitation passée, dans lequel le livre de codes de mode de transition comprend un livre de codes de formes d'impulsion glottale ;
fournir un indice de livre de codes au livre de codes de mode de transition ; et
générer, au moyen du livre de codes de mode de transition et en réponse à l'indice de livre de codes, l'un des vecteurs de code de l'ensemble correspondant à ladite excitation de mode de transition.

**23.** Procédé de mode de transition selon la revendication 22, dans lequel le signal sonore comprend un signal vocal et ledit procédé comporte une sélection de la trame de transition dans le groupe constitué par une trame comprenant un début voisé et une trame comprenant une transition entre deux sons voisés différents.

**24.** Procédé de mode de transition selon la revendication 22, dans lequel la trame de transition et/ou la ou les trames après la transition comprennent chacune une pluralité de sous-trames et ledit procédé comporte une utilisation du livre de codes de mode de transition dans une première partie des sous-trames et un livre de codes de type prédictif du codec de type prédictif dans une seconde partie des sous-trames.

**25.** Procédé de mode de transition selon la revendication 22, dans lequel la trame de transition et/ou la ou les trames après la transition comprennent chacune une pluralité de sous-trames et dans lequel ledit procédé comporte une utilisation du livre de codes de mode de transition dans la sous-trame contenant une première impulsion glottale d'une trame en cours.

**26.** Procédé de mode de transition selon la revendication 25, comportant une production, dans au moins une sous-trame précédant la sous-trame utilisant le livre de codes de mode de transition, d'un signal d'excitation globale comprenant exclusivement une composante de livre de codes d'innovation.

**27.** Procédé de mode de transition selon la revendication 22, dans lequel le livre de codes de formes d'impulsion glottale comprend un nombre prédéterminé de formes différentes d'impulsions glottales et dans lequel le procédé de mode de transition comporte une formation dans le livre de codes de formes d'impulsion glottale d'une pluralité de vecteurs de code différents en positionnant chaque forme d'impulsion glottale à une pluralité de positions différentes dans le vecteur de code.

**28.** Procédé de mode de transition selon la revendication 27, comportant, dans le livre de codes de formes d'impulsion glottale, une génération de vecteurs de code contenant seulement un élément non nul et un traitement au moyen d'un filtre de mise en forme des vecteurs de code contenant seulement un élément non nul afin de produire des vecteurs de code représentant des formes d'impulsion glottale centrées à des positions différentes.

**29.** Procédé de codage pour générer une excitation de mode de transition remplaçant une excitation de livre de codes adaptatif dans une trame de transition et/ou au moins une trame après la transition dans un signal sonore, comportant :

> générer un signal cible de recherche de livre de codes ;
> fournir un livre de codes de mode de transition pour générer un ensemble de vecteurs de code indépendants d'une excitation passée, les vecteurs de code dudit ensemble correspondant chacun à une excitation de mode de transition respective, dans lequel le livre de codes de mode de transition comprend un livre de codes de formes d'impulsion glottale ;
> rechercher le livre de codes de mode de transition pour trouver le vecteur de code dudit ensemble correspondant à une excitation de mode de transition correspondant de façon optimale au signal cible de recherche de livre de codes.

**30.** Procédé de codage selon la revendication 29, dans lequel la recherche du livre de codes de mode de transition comporte une application d'un critère donné à chaque forme d'impulsion glottale du livre de codes de formes d'impulsion glottale et à trouver, comme vecteur de code correspondant de façon optimale au signal cible de recherche de livre de codes, le vecteur de code de l'ensemble correspondant à une valeur maximale dudit critère.

**31.** Procédé de codage selon la revendication 29, dans lequel le signal sonore comprend un signal vocal et ledit procédé comporte en outre une sélection de la trame de transition dans le groupe constitué par une trame comprenant un début voisé et une trame comprenant une transition entre deux sons voisés différents.

**32.** Procédé de codage selon la revendication 29, dans lequel la trame de transition et/ou la ou les trames après la transition comprennent chacune une pluralité de sous-trames et dans lequel la recherche du livre de codes de mode de transition comporte une recherche du livre de codes de mode de transition dans une première partie des sous-trames et une recherche d'un livre de codes de type prédictif du dispositif codeur dans une seconde partie des sous-trames.

**33.** Procédé de codage selon la revendication 29, dans lequel la trame de transition et/ou la ou les trames après la transition comprennent chacune une pluralité de sous-trames et dans lequel ledit procédé comporte une utilisation du livre de codes de mode de transition dans la sous-trame contenant une première impulsion glottale d'une trame en cours.

**34.** Procédé de codage selon la revendication 33, comportant une production, dans au moins une sous-trame précédant la sous-trame utilisant le livre de codes de mode de transition, d'un signal d'excitation globale comprenant exclusivement une composante de livre de codes d'innovation.

**35.** Procédé de codage selon la revendication 29, dans lequel le livre de codes de formes d'impulsion glottale comprend un nombre prédéterminé de formes différentes d'impulsions glottales et le procédé de codage comporte une formation d'une pluralité de vecteurs de code différents du livre de codes de formes d'impulsion glottale en positionnant chaque forme d'impulsion glottale à une pluralité de positions différentes dans les vecteurs de code.

**36.** Procédé de codage selon la revendication 35, dans lequel la génération dans le livre de codes de formes d'impulsion glottale de l'ensemble de vecteurs de code indépendants d'une excitation passée comporte une génération de vecteurs de code contenant seulement un élément non nul et un traitement au moyen d'un filtre de mise en forme des vecteurs de code contenant seulement un élément non nul afin de produire des vecteurs de code représentant des formes d'impulsion glottale centrées à des positions différentes.

**37.** Procédé de codage selon la revendication 29, comportant en outre :

générer un signal cible de recherche de livre de codes d'innovation ;
fournir un livre de codes d'innovation pour générer un ensemble de vecteurs de code d'innovation correspondant chacun à une excitation d'innovation respective ;
rechercher le livre de codes d'innovation pour trouver le vecteur de code d'innovation dudit ensemble correspondant à une excitation d'innovation correspondant de façon optimale au signal cible de recherche de livre de codes d'innovation ; et
additionner l'excitation de mode de transition et l'excitation d'innovation afin de produire une excitation globale pour un filtre de synthèse de signal sonore ;
dans lequel la trame de transition et/ou la ou les trames après la transition comprennent chacune une pluralité de sous-trames et dans lequel, en fonction de l'endroit où l'impulsion glottale ou les impulsions glottales sont localisées dans les sous-trames, le procédé de codage comportant un codage des sous-trames à l'aide du livre de codes de mode de transition et/ou du livre de codes adaptatif et/ou du livre de codes d'innovation.

**38.** Procédé de décodage comprenant le procédé de transition selon l'une quelconque des revendications 22 à 28 pour produire l'excitation de mode de transition remplaçant l'excitation de livre de codes adaptatif dans la trame de transition et/ou la ou les trames après la transition dans le signal sonore.

**39.** Procédé de décodage selon la revendication 38, comprenant en outre :

fournir un livre de codes d'innovation pour générer un ensemble de vecteurs de code d'innovation ;
fournir un indice de livre de codes d'innovation au livre de codes d'innovation ;
générer, au moyen du livre de codes d'innovation et en réponse à l'indice de livre de codes d'innovation, l'un des vecteurs de code d'innovation de l'ensemble correspondant à une excitation d'innovation ; et
additionner l'excitation de mode de transition et l'excitation d'innovation afin de produire une excitation globale pour un filtre de synthèse de signal sonore.

*Figure 1*

*Figure 2*

*Figure 3*

*Figure 4*

*Figure 5*

Figure 6

Figure 7

*Figure 8*

*Figure 9*

$$\mathbf{G}^{\mathrm{T}} \qquad \cdot \qquad \mathbf{H}^{\mathrm{T}} \qquad = \qquad \mathbf{Z}^{\mathrm{T}}$$

*Figure 10*

*Figure 11*

$q_{k'}(n)$ $\widetilde{q}_{k'}(n)$

$\alpha$ $z^{-T_0}$

a)

$T_0$

1000

500

$\widetilde{q}_{k'}(n)$ 0

-500

0 $k'$ $n$ $N-1$

b)

*Figure 12*

position

$k'$ shape repetition

$p_k(n)$ $G(z)$ $q_k(n)$ $Q(z)$ $\widetilde{q}_{k'}(n)$ $H(z)$ $y_1(n)$ $g_p$

*Figure 13*

*Figure 14*

*Figure 15*

*Figure 16*

*Figure 17*

*Figure 18*

a) input speech signal

$s(n)$

b) output synthesized signal – standard EV-VBR

unvoiced coding    FEC correction    generic coding    generic coding    generic coding

$s'(n)$

c) output synthesized signal – EV-VBR with TM technique

unvoiced coding    FEC correction    TM coding    generic coding    generic coding

$s'_{TM}(n)$

*Figure 19*

EP 2 102 619 B1

*Figure 20*

*Figure 21*

*Figure 22*

56

*Figure 23*

*Figure 24*

*Figure 25*

$T_0$ – not used $\qquad$ $T_0$ – not used $\qquad$ $T_0$ – not used $\qquad$ $T_0$ – standard coding

| zeros | zeros | zeros | glottal-shape codebook search |
|---|---|---|---|

$y_1(n)$

0 $\qquad$ $N$ $\qquad$ $2 \cdot N$ $\qquad$ $3 \cdot N$ $\qquad$ $n$

*Figure 26*

901 → A/D Converter (902) → Speech Encoder (903) → Channel Encoder (904) → Channel (905)

909 ← D/A Converter (908) ← Speech Decoder (907) ← Channel Decoder (906) ← Channel

*Figure 27*

**EP 2 102 619 B1**

**Patent documents cited in the description**

- US 6223550 B

**Non-patent literature cited in the description**

- **B. BESSETTE ; R. SALAMI ; R. LEFEBVRE ; M. JELINEK ; J. ROTOLA-PUKKILA ; J. VAINIO ; H. MIKKOLA ; K. JARVINEN.** The Adaptive Multi-Rate Wideband Speech Codec (AMR-WB). *Special Issue of IEEE Transactions on Speech and Audio Processing,* November 2002, vol. 10 (8), 620-636
- **R. SALAMI ; C. LAFLAMME ; J-P. ADOUL ; D. MASSALOUX.** A toll quality 8 kb/s speech codec for the personal communications system (PCS). *IEEE Trans. on Vehicular Technology,* August 1994, vol. 43 (3), 808-816

- **APR. 2005.** Source-Controlled Variable-Rate Multimode Wideband Speech Codec (VMR-WB), Service Options 62 and 63 for Spread Spectrum Systems. *3GPP2 Tech. Spec. C.S0052-A v1.0, http://www.3gpp2.org*
- **S. P. LLOYD.** Least squares quantization in PCM. *IEEE Transactions on Information Theory,* March 1982, vol. 28 (2), 129-136